(19) Europäisches Patentamt

European Patent Office

Office européen des brevets

(11) **EP 4 572 175 A1**

(12) **EUROPEAN PATENT APPLICATION**
published in accordance with Art. 153(4) EPC

(43) Date of publication:
**18.06.2025   Bulletin 2025/25**

(21) Application number: **23881782.9**

(22) Date of filing: **23.10.2023**

(51) International Patent Classification (IPC):
**H04B 7/06** $^{(2006.01)}$

(52) Cooperative Patent Classification (CPC):
**H04B 7/06; H04L 25/02**

(86) International application number:
**PCT/CN2023/125893**

(87) International publication number:
**WO 2024/088204 (02.05.2024 Gazette 2024/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.10.2022   CN 202211340800**

(71) Applicant: **Huawei Technologies Co., Ltd.
Shenzhen, Guangdong 518129 (CN)**

(72) Inventors:
• **RUAN, Wei
  Shenzhen, Guangdong 518129 (CN)**
• **CHEN, Yan
  Shenzhen, Guangdong 518129 (CN)**
• **SHEN, Ji
  Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **CHANNEL FEEDBACK METHOD, APPARATUS AND SYSTEM, AND STORAGE MEDIUM**

(57)   A channel feedback method, apparatus, and system, and a storage medium are provided. An AP sends a first frame to a STA, where the first frame includes at least one of the following segment information: a first segmentation enabling indication and a first segment number M; and the first segment number M indicates that an equivalent frequency domain channel corresponds to M subband channels; and the AP communicates with the STA based on the at least one piece of segment information. The AP indicates the segment information, so that a channel is smooth in each segment. This increases a beamforming gain.

```
┌──────┐                                              ┌──────┐
│  AP  │                                              │ STA  │
└──────┘                                              └──────┘
   │   S601: First frame (including at least one of      │
   │   the following segment information: a first        │
   │   segmentation enabling indication and a first      │
   │   segment number)                                   │
   │ ──────────────────────────────────────────────────>│
   │                                                     │
   │   S602: The AP communicates with the STA based      │
   │   on the at least one piece of segment information   │
   │ <──────────────────────────────────────────────────>│
   │                                                     │
```

FIG. 6

**Description**

This application claims priority to Chinese Patent Application No. 202211340800.9, filed with the China National Intellectual Property Administration on October 29, 2022 and entitled "CHANNEL FEEDBACK METHOD, APPARATUS, AND SYSTEM, AND STORAGE MEDIUM", which is incorporated herein by reference in its entirety.

**TECHNICAL FIELD**

This application relates to the field of communication technologies, and in particular, to a channel feedback method, apparatus, and system, and a storage medium.

**BACKGROUND**

Wi-Fi uses a transmit beamforming (Tx beamforming, TxBF) or precoding (precoding) technology to increase a throughput. Specifically, an access point (access point, AP) weights an original frequency domain channel H based on a right singular matrix ("V matrix" for short) fed back by a station (station, STA), to obtain an equivalent channel, and transmits data on the equivalent frequency domain channel.

In some scenarios, an amplitude or phase jump occurs on the V matrix fed back by the STA. As a result, the equivalent frequency domain channel obtained through weighting is no longer "contiguous". Further, a beamforming gain is reduced or even a negative gain is generated, and a nearby subcarrier cannot be smoothly filtered.

In view of this, how to perform channel feedback to improve contiguity of an equivalent frequency domain channel and further increase a beamforming gain is a problem to be resolved in this application.

**SUMMARY**

This application provides a channel feedback method, apparatus, and system, and a storage medium, to increase a beamforming gain.

To achieve the foregoing objective, the following technical solutions are used in embodiments of this application: According to a first aspect, a channel feedback method is provided. The method includes: sending a first frame to a station, where the first frame includes at least one of the following segment information: a first segmentation enabling indication and a first segment number M; and the first segment number M indicates that an equivalent frequency domain channel corresponds to M subband channels; and communicating with the station based on the at least one piece of segment information.

In this aspect, an AP sends the first frame to the STA, where the first frame includes at least one of the following segment information: the first segmentation enabling indication and the first segment number M; and the first segment number M indicates that the equivalent frequency domain channel corresponds to the M subband channels; and the AP communicates with the STA based on the at least one piece of segment information. The AP indicates the segment information, so that a channel is smooth in each segment. This increases a beamforming gain.

In a possible implementation, the first frame includes a null data packet (null data packet, NDP) frame, the NDP frame is used to request the station to perform channel estimation on an original frequency domain channel H, and the original frequency domain channel H corresponds to M subband channels.

In this implementation, the at least one piece of segment information may be sent via the NDP frame.

In another possible implementation, the method further includes: receiving a right singular matrix corresponding to each subband channel in the M subband channels from the station.

In this implementation, after receiving the at least one piece of segment information via the NDP frame, the STA performs singular value decomposition on a channel estimation value $\hat{H}$ based on the at least one piece of segment information, to obtain the right singular matrix corresponding to each subband channel in the M subband channels, and feeds back the right singular matrix corresponding to each subband channel in the M subband channels to the AP, so that an equivalent frequency domain channel obtained through weighting is smooth in each segment. This increases a smooth filtering gain and finally increases the beamforming gain.

In still another possible implementation, the method further includes: performing, based on the first segment number M, segment-based interpolation on the right singular matrix corresponding to each subband channel in the M subband channels, to obtain right singular matrices in a full bandwidth; obtaining a second segmentation enabling indication and a second segment number M' based on the right singular matrices in the full bandwidth obtained through segment-based interpolation; sending a first extremely high throughput signal EHT-SIG frame to the station, where the first EHT-SIG frame includes at least one of the following information: the second segmentation enabling indication and the second segment number M'.

In this implementation, the AP performs interpolation on a $\hat{V}$ matrix corresponding to each subband channel, to obtain V' matrices corresponding to all subcarriers in the subband channel, and finally obtains the right singular matrices in the full bandwidth. The full bandwidth herein does not include "discontiguous" subcarriers. After obtaining the right singular matrices in the full bandwidth obtained through segment-based interpolation, the AP may further determine the second segmentation enabling indication and the second segment number M' based on the right singular matrices in the full bandwidth obtained through segment-based interpolation. The second segment number M' may be the same as or different from the first segment number M. Therefore, accurate segment information can be indicated to the STA, so that the STA can perform smooth filtering based on the segment information. This increases the beamforming gain.

In still another possible implementation, the first frame includes a second extremely high throughput signal EHT-SIG frame.

In this implementation, the at least one piece of segment information may be sent via the second EHT-SIG frame.

In still another possible implementation, the method further includes: receiving quantized and/or compressed right singular matrices in a full bandwidth from the station; and determining the first segment number M based on the quantized and/or compressed right singular matrices in the full bandwidth.

In this implementation, the STA may not be improved, but the AP determines the segment information based on the right singular matrices fed back by the STA in the full bandwidth.

In still another possible implementation, the method further includes: obtaining, based on the first segment number M, a right singular matrix corresponding to each subband channel in the M subband channels; and performing segment-based interpolation on the right singular matrix corresponding to each subband channel in the M subband channels based on the first segment number M, to obtain right singular matrices in the full bandwidth.

In this implementation, the AP performs interpolation on a $\hat{V}$ matrix corresponding to each subband channel, to obtain $\hat{V}'$ matrices corresponding to all subcarriers in the subband channel, and finally obtains the right singular matrices in the full bandwidth. The full bandwidth herein does not include "discontiguous" subcarriers.

In still another possible implementation, the method further includes: receiving a right singular matrix corresponding to each subband channel in $M''$ subband channels from the station; and receiving first information from the station, where the first information includes at least one of the following information: a third segmentation enabling indication and a third segment number $M''$.

In this implementation, the STA may autonomously perform segmentation based on a channel obtained through estimation, and feed back segment information to the AP.

In still another possible implementation, the method further includes: performing, based on the first information, segment-based interpolation on the right singular matrix corresponding to each subband channel in the $M''$ subband channels, to obtain right singular matrices in a full bandwidth; and determining the first segment number M based on the right singular matrices in the full bandwidth obtained through segment-based interpolation.

In this implementation, the AP performs interpolation on a $\hat{V}$ matrix corresponding to each subband channel, to obtain $\hat{V}$ matrices corresponding to all subcarriers in the subband channel, and finally obtains the right singular matrices in the full bandwidth. The full bandwidth herein does not include "discontiguous" subcarriers. After obtaining the right singular matrices in the full bandwidth obtained through segment-based interpolation, the AP may further determine the segment information based on the right singular matrices in the full bandwidth obtained through segment-based interpolation.

In still another possible implementation, the communicating with the station based on the at least one piece of segment information includes: performing, based on the first segment number M, segment-based interpolation on the right singular matrix corresponding to each subband channel in the M subband channels, to obtain the right singular matrices in the full bandwidth; performing beamforming on the original frequency domain channel H based on the right singular matrices in the full bandwidth, to generate a transmit beamforming frame; and sending the transmit beamforming frame to the station.

In this implementation, the AP performs beamforming on the original frequency domain channel H via the $\hat{V}$ matrices in the full bandwidth obtained through segment-based interpolation, to generate the TxBF frame. The $\hat{V}$ matrix obtained through segment-based interpolation is unchanged in each subband channel. This can ensure that the weighted equivalent channel is "contiguous" in each subband, and further ensure that the STA can perform smooth filtering on the equivalent channel in a segment manner, to increase the beamforming gain.

In still another possible implementation, the method further includes: receiving quantized and/or compressed right singular matrices in a full bandwidth from the station and a right singular matrix corresponding to each subband channel in $M''$ subband channels; receiving first information from the station, where the first information includes at least one of the following information: a third segmentation enabling indication and a third segment number $M''$; performing, based on the third segment number $M''$, segment-based interpolation on the right singular matrix corresponding to each subband channel in the $M''$ subband channels, to obtain right singular matrices in the full bandwidth as a first copy; determining the first segmentation enabling indication and the first segment number M based on the quantized and/or compressed right singular matrices in the full bandwidth; and performing segment-based interpolation on the quantized and/or compressed right singular matrices in the full bandwidth based on the first segment number M, to obtain right singular matrices in the full bandwidth as a second copy; and the communicating with the station based on the at least one piece of segment information includes: sending a transmit beamforming frame to the station, where the transmit beamforming frame is generated based on the first copy or the second copy.

In this implementation, both the AP and the STA can determine the segment information, and the AP can independently determine to perform beamforming based on the first copy or the second copy. This improves beamforming flexibility.

In still another possible implementation, the first frame further includes a segmentation mode, and the segmentation mode indicates that the transmit beamforming frame uses the first copy or the second copy.

In still another possible implementation, the method further includes: receiving an association request from the station; and sending an association response to the station, where the association request includes indication information indicating that the station has a capability of calculating a right singular matrix by segment, and/or the association response includes indication information indicating that the AP has a capability of calculating a right singular matrix by segment.

In this implementation, the STA may indicate, to the AP, that the STA has the capability of calculating the right singular matrix by segment, and/or the AP may indicate, to the STA, that the AP has the capability of calculating the right singular matrix by segment, so that the other parties can understand the capabilities from each other.

According to a second aspect, a channel feedback method is provided. The method includes: receiving a first frame from an access point, where the first frame includes at least one of the following segment information: a segmentation enabling indication and a first segment number M; and the first segment number M indicates that an equivalent frequency domain channel corresponds to M subband channels; and communicating with the station based on the at least one piece of segment information.

In this aspect, a STA receives the first frame sent by the AP, where the first frame includes at least one of the following segment information: the first segmentation enabling indication and the first segment number M; and the first segment number M indicates that the equivalent frequency domain channel corresponds to the M subband channels; and the STA communicates with the AP based on the at least one piece of segment information. The AP indicates the segment information, so that when the STA performs smooth filtering, a channel is smooth in each segment. This increases a beamforming gain.

In a possible implementation, the first frame includes a null data packet NDP frame, the NDP frame is used to request the station to perform channel estimation on an original frequency domain channel H, and the original frequency domain channel H corresponds to M subband channels; and the method further includes: dividing, based on the at least one piece of segment information, a channel estimation value $\hat{H}$ obtained by performing channel estimation on the original frequency domain channel H into the M subband channels; performing singular value decomposition on the channel estimation value $\hat{H}$ based on the NDP frame, to obtain a right singular matrix corresponding to each subband channel in the M subband channels; and sending, to the access point, the right singular matrix corresponding to each subband channel in the M subband channels.

In this implementation, the at least one piece of segment information may be received via the NDP frame. After receiving the at least one piece of segment information via the NDP frame, the STA performs singular value decomposition on the channel estimation value $\hat{H}$ based on the at least one piece of segment information, to obtain the right singular matrix corresponding to each subband channel in the M subband channels, and feeds back the right singular matrix corresponding to each subband channel in the M subband channels to the AP, so that an equivalent frequency domain channel obtained through weighting is smooth in each segment. This increases a smooth filtering gain and finally increases the beamforming gain.

In another possible implementation, the method further includes: receiving a first extremely high throughput signal EHT-SIG frame from the access point, where the first EHT-SIG frame includes at least one of the following information: a second segmentation enabling indication and a second segment number $M'$.

In still another possible implementation, the first frame includes a second extremely high throughput signal EHT-SIG frame.

In this implementation, the at least one piece of segment information may be received via the second EHT-SIG frame.

In still another possible implementation, the method further includes: determining a third segmentation enabling indication and a third segment number $M''$ based on a channel estimation value $\hat{H}$ obtained by performing channel estimation on an original frequency domain channel H; performing singular value decomposition on the channel estimation value $\hat{H}$, to obtain a right singular matrix corresponding to each subband channel in $M''$ subband channels; sending, to the access point, the right singular matrix corresponding to each subband channel in the $M''$ subband channels; and sending first information to the access point, where the first information includes at least one of the following information: the third segmentation enabling indication and the third segment number $M''$.

In this implementation, the STA may autonomously perform segmentation based on a channel obtained through estimation, and feed back segment information to the AP.

In still another possible implementation, the communicating with the station based on the at least one piece of segment information includes: receiving a transmit beamforming frame from the access point.

In still another possible implementation, the method further includes: determining a third segmentation enabling indication and a third segment number M" based on a channel estimation value $\hat{H}$ obtained by performing channel estimation on an original frequency domain channel H; performing singular value decomposition on the channel estimation value $\hat{H}$, to obtain a right singular matrix corresponding to each subband channel in M" subband channels; sending, to the access point, quantized and/or compressed right singular matrices in a full bandwidth and the right singular matrix corresponding to each subband channel in the M" subband channels; and sending first information to the access point, where the first information includes at least one of the following information: the third segmentation enabling indication and the third segment number M"; and the communicating with the station based on the at least one piece of segment information includes: receiving a transmit beamforming frame from the access point, where the transmit beamforming frame is generated based on the first copy or the second copy.

In this implementation, both the AP and the STA can determine the segment information, and the AP can independently determine to perform beamforming based on the first copy or the second copy. This improves beamforming flexibility.

In still another possible implementation, the method further includes: receiving an association request from the station; and sending an association response to the station, where the association request includes indication information indicating that the station has a capability of calculating a right singular matrix by segment, and/or the association response includes indication information indicating that the AP has a capability of calculating a right singular matrix by segment.

In this implementation, the STA may indicate, to the AP, that the STA has the capability of calculating the right singular matrix by segment, and/or the AP may indicate, to the STA, that the AP has the capability of calculating the right singular matrix by segment, so that the other parties can understand the capabilities from each other.

According to a third aspect, a channel feedback method is provided. The method includes: receiving a null data packet NDP frame from an access point, where the NDP frame is used to request a station to perform channel estimation on an original frequency domain channel H; obtaining a segment number M and a right singular matrix corresponding to each subband channel in M subband channels based on an estimation value $\hat{H}$ obtained by performing channel estimation on the original frequency domain channel H; sending right singular matrices in a full bandwidth to the access point, where the right singular matrices in the full bandwidth are obtained based on the right singular matrices corresponding to the M subband channels, and a right singular matrix corresponding to a channel at each subcarrier on the M subband channels is obtained by replicating the right singular matrix corresponding to each subband channel in the M subband channels; and receiving a transmit beamforming frame from the access point.

In this aspect, the STA determines segment information based on the channel estimation value, and determines, based on the segment information, the $\hat{V}'$ matrix corresponding to each subband channel in the M subband channels. The STA feeds back quantized and/or compressed $\hat{V}$ matrices in the full bandwidth to the AP, where the $\hat{V}$ matrices in the full bandwidth are obtained based on the $\hat{V}'$ matrices corresponding to the M subband channels, and the $\hat{V}$ matrix at each subcarrier on the M subband channels is obtained by replicating the $\hat{V}$ matrix corresponding to each subband channel in the M subband channels. In this way, the AP can perform beamforming via the $\hat{V}$ matrices fed back by the STA in the full bandwidth, and the full bandwidth does not include "discontiguous" subcarriers, so that the STA can perform smooth filtering. This increases a beamforming gain.

In a possible implementation, the method further includes: sending an association request to the access point, where the association request includes indication information indicating that the STA has a capability of calculating a right singular matrix by segment; and receiving an association response from the access point.

In this implementation, the STA may indicate, to the AP, that the STA has the capability of calculating the right singular matrix by segment, so that the AP can understand the capability of the STA.

According to a fourth aspect, a channel feedback apparatus is provided.

In a possible implementation, the channel feedback apparatus may be an information transmission device, and the channel feedback apparatus includes a processor and a transceiver. The processor is configured to control and manage an action of the channel feedback apparatus. For example, the processor is configured to support the channel feedback apparatus to perform a step of performing segment-based interpolation on a right singular matrix corresponding to each subband channel in M subband channels based on a first segment number M, to obtain right singular matrices in a full bandwidth, and a step of obtaining a second segmentation enabling indication and a second segment number M' based on the right singular matrices in the full bandwidth obtained through segment-based interpolation; and/or is configured to perform another technical process described in this specification. The transceiver is configured to support the channel feedback apparatus to perform a step of sending a first frame to a station and a step of communicating with the station based on at least one piece of segment information. Optionally, the channel feedback apparatus may further include a memory.

In still another possible implementation, the channel feedback apparatus may be an information transmission board, and the channel feedback apparatus includes a processor and a transceiver. The processor is configured to control and manage an action of the channel feedback apparatus. For example, the processor is configured to support the channel feedback apparatus to perform a step of performing segment-based interpolation on a right singular matrix corresponding to each subband channel in M subband channels based on a first segment number M, to obtain right singular matrices in a full bandwidth, and a step of obtaining a second segmentation enabling indication and a second segment number $M'$ based on the right singular matrices in the full bandwidth obtained through segment-based interpolation; and/or is configured to perform another technical process described in this specification. The transceiver is configured to support the channel feedback apparatus to perform a step of sending a first frame to a station and a step of communicating with the station based on at least one piece of segment information. Optionally, the channel feedback apparatus may further include a memory.

In still another possible implementation, the channel feedback apparatus is alternatively implemented by a general-purpose processor, namely, a chip. The general-purpose processor includes a processing circuit and a communication interface. The processing circuit is configured to perform a step of performing segment-based interpolation on a right singular matrix corresponding to each subband channel in M subband channels based on a first segment number M, to obtain right singular matrices in a full bandwidth, and a step of obtaining a second segmentation enabling indication and a second segment number $M'$ based on the right singular matrices in the full bandwidth obtained through segment-based interpolation. The communication interface is configured to perform a step of sending a first frame to a station and a step of communicating with the station based on at least one piece of segment information.

Optionally, the general-purpose processor may further include a storage medium. The processing circuit communicates with an external device through the communication interface. The communication interface may be an input/output interface, an interface circuit, an output circuit, an input circuit, a pin, a related circuit, or the like on the chip or a chip system. The processor may alternatively be embodied as a processing circuit or a logic circuit. The storage medium is configured to store program code. The communication interface is configured to support the channel feedback apparatus to perform communication. When the program code is executed by the processor, the communication interface is controlled to send the first frame to the station and communicate with the station based on the at least one piece of segment information.

In still another possible implementation, the channel feedback apparatus may alternatively be implemented by using one or more FPGAs, a PLD, a controller, a state machine, gate logic, a discrete hardware component, any other suitable circuit, or any combination of circuits capable of performing various functions described throughout this application.

According to a fifth aspect, a channel feedback apparatus is provided.

In a possible implementation, the channel feedback apparatus may be an information transmission device, and the channel feedback apparatus includes a processor and a transceiver. The transceiver is configured to support the channel feedback apparatus to perform a step of receiving a first frame from an access point and a step of communicating with a station based on at least one piece of segment information. The processor is configured to control and manage an action of the channel feedback apparatus. For example, the processor is configured to support the channel feedback apparatus to perform a step of dividing, based on the at least one piece of segment information, a channel estimation value $\hat{H}$ obtained by performing channel estimation on an original frequency domain channel $H$ into M subband channels, and a step of performing singular value decomposition on the channel estimation value $\hat{H}$ based on an NDP frame, to obtain a right singular matrix corresponding to each subband channel in the M subband channels; and/or is configured to perform another technical process described in this specification. Optionally, the channel feedback apparatus may further include a memory.

In still another possible implementation, the channel feedback apparatus may be an information transmission board, and the channel feedback apparatus includes a processor and a transceiver. The transceiver is configured to support the channel feedback apparatus to perform a step of receiving a first frame from an access point and a step of communicating with a station based on at least one piece of segment information. The processor is configured to control and manage an action of the channel feedback apparatus. For example, the processor is configured to support the channel feedback apparatus to perform a step of dividing, based on the at least one piece of segment information, a channel estimation value $\hat{H}$ obtained by performing channel estimation on an original frequency domain channel H into M subband channels, and a step of performing singular value decomposition on the channel estimation value $\hat{H}$ based on an NDP frame, to obtain a right singular matrix corresponding to each subband channel in the M subband channels; and/or is configured to perform another technical process described in this specification. Optionally, the channel feedback apparatus may further include a memory.

In still another possible implementation, the channel feedback apparatus is alternatively implemented by a general-purpose processor, namely, a chip. The general-purpose processor includes a processing circuit and a communication interface. The communication interface is configured to perform a step of receiving a first frame from an access point and a step of communicating with a station based on at least one piece of segment information. The processing circuit is configured to perform a step of dividing, based on the at least one piece of segment information, a channel estimation value $\hat{H}$ obtained by performing channel estimation on an original frequency domain channel H into M subband channels, and a step of performing singular value decomposition on the channel estimation value $\hat{H}$ based on an NDP frame, to obtain a right singular matrix corresponding to each subband channel in the M subband channel. Optionally, the general-purpose processor may further include a storage medium.

The processing circuit communicates with an external device through the communication interface. The communication interface may be an input/output interface, an interface circuit, an output circuit, an input circuit, a pin, a related circuit, or the like on the chip or a chip system. The processor may alternatively be embodied as a processing circuit or a logic circuit. The storage medium is configured to store program code. The communication interface is configured to support the channel feedback apparatus to perform communication. When the program code is executed by the processor, the communication interface is controlled to receive the first frame from the access point and communicate with the station based on the at least one piece of segment information.

In still another possible implementation, the channel feedback apparatus may alternatively be implemented by using one or more FPGAs, a PLD, a controller, a state machine, gate logic, a discrete hardware component, any other suitable circuit, or any combination of circuits capable of performing various functions described throughout this application.

According to a sixth aspect, a channel feedback apparatus is provided.

In a possible implementation, the channel feedback apparatus may be an information transmission device, and the channel feedback apparatus includes a processor and a transceiver. The processor is configured to control and manage an action of the channel feedback apparatus. For example, the processor is configured to support the channel feedback apparatus to perform a step of obtaining a segment number M and a right singular matrix corresponding to each subband channel in M subband channels based on an estimation value $\hat{H}$ obtained by performing channel estimation on an original frequency domain channel H; and/or is configured to perform another technical process described in this specification. The transceiver is configured to support the channel feedback apparatus to perform a step of receiving a null data packet NDP frame from an access point, a step of sending right singular matrices in a full bandwidth to the access point, where the right singular matrices in the full bandwidth are obtained based on the right singular matrices corresponding to the M subband channels, and the right singular matrix corresponding to each subband channel in the M subband channels is obtained by replicating the right singular matrix corresponding to each subband channel in the M subband channels, and a step of receiving a transmit beamforming frame from the access point. Optionally, the channel feedback apparatus may further include a memory.

In still another possible implementation, the channel feedback apparatus may be an information transmission board, and the channel feedback apparatus includes a processor and a transceiver. The processor is configured to control and manage an action of the channel feedback apparatus. For example, the processor is configured to support the channel feedback apparatus to perform a step of obtaining a segment number M and a right singular matrix corresponding to each subband channel in M subband channels based on an estimation value $\hat{H}$ obtained by performing channel estimation on an original frequency domain channel H; and/or is configured to perform another technical process described in this specification. The transceiver is configured to support the channel feedback apparatus to perform a step of receiving a null data packet NDP frame from an access point, a step of sending right singular matrices in a full bandwidth to the access point, where the right singular matrices in the full bandwidth are obtained based on the right singular matrices corresponding to the M subband channels, and the right singular matrix corresponding to each subband channel in the M subband channels is obtained by replicating the right singular matrix corresponding to each subband channel in the M subband channels, and a step of receiving a transmit beamforming frame from the access point. Optionally, the channel feedback apparatus may further include a memory.

In still another possible implementation, the channel feedback apparatus is alternatively implemented by a general-purpose processor, namely, a chip. The general-purpose processor includes a processing circuit and a communication interface. The processing circuit is configured to perform a step of obtaining a segment number M and a right singular matrix corresponding to each subband channel in M subband channels based on an estimation value $\hat{H}$ obtained by performing channel estimation on an original frequency domain channel H. The communication interface is configured to perform a step of receiving a null data packet NDP frame from an access point, a step of sending right singular matrices in a full bandwidth to the access point, where the right singular matrices in the full bandwidth are obtained based on the right singular matrices corresponding to the M subband channels, and the right singular matrix corresponding to each subband channel in the M subband channels is obtained by replicating the right singular matrix corresponding to each subband channel in the M subband channels, and a step of receiving a transmit beamforming frame from the access point.

Optionally, the general-purpose processor may further include a storage medium. The processing circuit communicates with an external device through the communication interface. The communication interface may be an input/output interface, an interface circuit, an output circuit, an input circuit, a pin, a related circuit, or the like on the chip or a chip system. The processor may alternatively be embodied as a processing circuit or a logic circuit. The storage medium is configured to store program code. The communication interface is configured to support the channel feedback apparatus to perform communication. When the program code is executed by the processor, the communication interface is controlled.

In still another possible implementation, the channel feedback apparatus may alternatively be implemented by using one or more FPGAs, a PLD, a controller, a state machine, gate logic, a discrete hardware component, any other suitable circuit, or any combination of circuits capable of performing various functions described throughout this application.

According to a seventh aspect, a computer-readable storage medium is provided. The computer-readable storage medium stores instructions. When the instructions are run on a computer, the computer is enabled to perform the channel feedback method according to the first aspect, the second aspect, or the third aspect or any one of the possible implementations of the first aspect, the second aspect, or the third aspect.

According to an eighth aspect, a computer program product including instructions is provided. When the computer program product runs on a computer, the computer is enabled to perform the channel feedback method according to the first aspect, the second aspect, or the third aspect or any one of the possible implementations of the first aspect, the second aspect, or the third aspect.

It may be understood that the apparatus, the computer storage medium, or the computer program product of any one of the channel feedback methods described above are used to perform corresponding method described above. Therefore, for beneficial effects that can be achieved by the apparatus, the computer storage medium, or the computer program product, refer to the beneficial effects in the corresponding method described above, and details are not described herein again.

## BRIEF DESCRIPTION OF DRAWINGS

FIG. 1 is a diagram of a structure of a channel feedback system according to an embodiment of this application;

FIG. 2 is a schematic flowchart of beamforming according to an embodiment of this application;

FIG. 3 is a schematic flowchart of precoding according to an embodiment of this application;

FIG. 4a is a diagram of an example of an amplitude response of an original frequency domain channel H according to an embodiment of this application;

FIG. 4b is a diagram of an example of an amplitude response of a precoded equivalent frequency domain channel $H_{eff}$ according to an embodiment of this application;

FIG. 5 is a diagram of an example of bandwidth division according to an embodiment of this application;

FIG. 6 is a schematic flowchart of a channel feedback method according to an embodiment of this application;

FIG. 7 is a schematic flowchart of another channel feedback method according to an embodiment of this application;

FIG. 8a is a diagram of a format of an EHT NDPA frame according to an embodiment of this application;

FIG. 8b is a diagram of a format of a station information field in an EHT NDPA frame according to an embodiment of this application;

FIG. 9 is a diagram of an access and authentication process between an AP and a STA according to an embodiment of this application;

FIG. 10A and FIG. 10B are a schematic flowchart of still another channel feedback method according to an embodiment of this application;

FIG. 11a is a diagram of a format of an EHT PPDU frame according to an embodiment of this application;

FIG. 11b is a diagram of a format of a B13 field in an EHT-SIG field of an EHT PPDU frame according to an embodiment of this application;

FIG. 12A and FIG. 12B are a schematic flowchart of still another channel feedback method according to an embodiment of this application;

FIG. 13A and FIG. 13B are a schematic flowchart of still another channel feedback method according to an embodiment of this application;

FIG. 14A to FIG. 14C are a schematic flowchart of still another channel feedback method according to an embodiment of this application;

FIG. 15A and FIG. 15B are a schematic flowchart of still another channel feedback method according to an embodiment of this application;

FIG. 16 is a schematic flowchart of still another channel feedback method according to an embodiment of this application;

FIG. 17 is a diagram of a structure of a channel feedback apparatus according to an embodiment of this application; and

FIG. 18 is a diagram of a structure of another channel feedback apparatus according to an embodiment of this application.

## DESCRIPTION OF EMBODIMENTS

The following describes embodiments of this application with reference to accompanying drawings in embodiments of this application.

It should be understood that, embodiments of this application may be applied to various channel feedback systems such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5G communication system, and a future 6G communication system.

It should be further understood that embodiments of this application may be further applied to various non-orthogonal multiple access technology-based communication systems such as a sparse code multiple access (sparse code multiple access, SCMA) system. Certainly, SCMA may also be referred to as another name in the communication field. Further, technical solutions in embodiments of this application may be applied to a multi-carrier transmission system using the non-orthogonal multiple access technology, for example, an orthogonal frequency division multiplexing (orthogonal frequency division multiplexing, OFDM) system using the non-orthogonal multiple access technology, filter bank multi-carrier (filter bank multi-carrier, FBMC), a generalized frequency division multiplexing (generalized frequency division multiplexing, GFDM) system, or a filtered-orthogonal frequency division multiplexing (filtered-OFDM, F-OFDM) system.

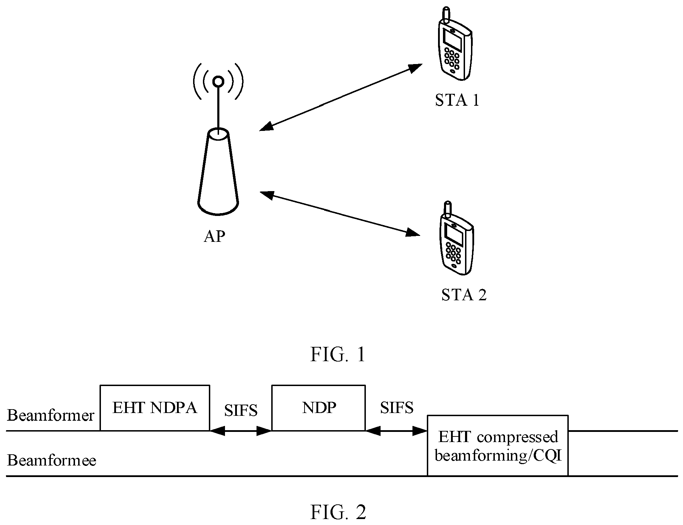

It should be further understood that embodiments of this application may be applied to Wi-Fi wireless communication. A Wi-Fi wireless channel feedback system includes an access point (access point, AP) and a station (station, STA). The station may also be referred to as a station. Related wireless communication scenarios may include communication between an AP and a STA, communication between APs, communication between STAs, and the like. Embodiments of this application are described by using communication between an AP and a STA as an example. FIG. 1 is a diagram of a structure of a channel feedback system according to an embodiment of this application. An AP performs wireless communication with a STA 1 and a STA 2.

Wi-Fi uses a TxBF (or precoding) technology to increase a throughput. FIG. 2 is a schematic flowchart of beamforming according to an embodiment of this application. After association between an AP and a STA is completed, a beamformer (beamformer) (herein referred to as the AP) sends a null data packet announcement (null data packet announcement, NDPA) frame to a beamformee (beamformee) (herein referred to as the STA), to prompt the STA that the beamformer is about to send a null data packet (null data packet, NDP) frame after a short interframe space (short interframe space, SIFS). The STA completes channel estimation and calculation of a V matrix and a Q matrix based on the NDP frame sent by the AP, feeds back the compressed V matrix to the AP in a compressed beamforming report (Compressed Beamforming Report) field, and feeds back the Q matrix to the AP in a channel quality information report (CQI Report) field. In subsequent descriptions of this specification, unless otherwise specified, in a process in which the STA feeds back a quantized and compressed V matrix to the AP, a corresponding Q matrix is also fed back by default.

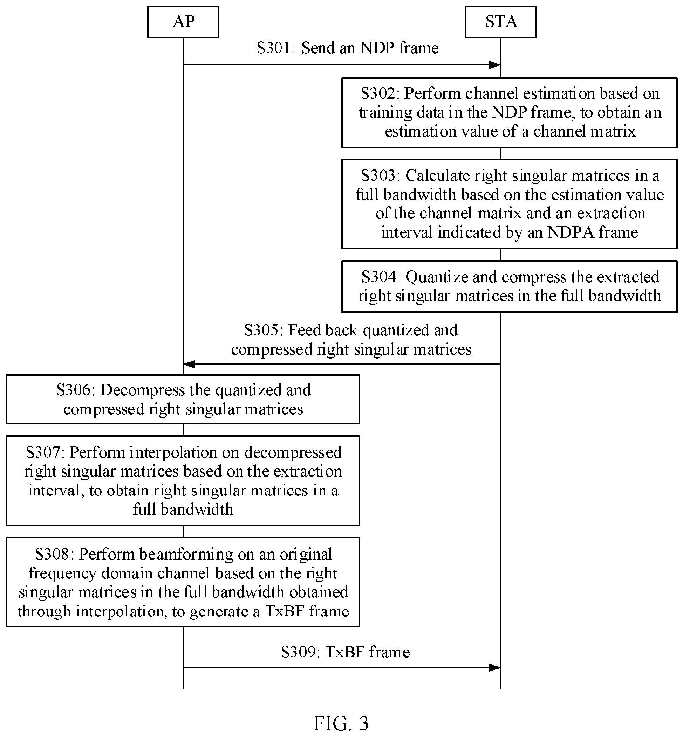

After receiving the V matrix fed back by the STA, the AP performs precoding on an original frequency domain channel via the *V* matrix in a subsequent TxBF frame (or sends a TxBF frame), to improve channel quality. FIG. 3 is a schematic flowchart of precoding according to an embodiment of this application. The procedure includes the following steps.

S301: An AP sends NDP frames (including an NDPA frame and an NDP frame) to a STA.

S302: The STA performs channel estimation based on training data in the NDP frame, to obtain an estimation value $\hat{H}$ of a channel matrix.

S303: The STA calculates, based on $\hat{H}$ and a parameter (an extraction interval $Ng$) indicated by the NDPA frame, $\hat{V}$ matrices corresponding to required subcarriers (that is, $\hat{V}$ matrix calculation and extraction processes). The $\hat{V}$ matrices herein are right singular matrices obtained through calculation based on the estimation value $\hat{H}$ of the channel matrix in a full bandwidth, and a $V$ matrix is a right singular matrix obtained through calculation based on an original channel $H$.

The $\hat{V}$ matrix calculation process is as follows:

Without loss of generality, it is assumed that indexes corresponding to a $\hat{V}$ matrix that needs to be transmitted after $Ng$ is indicated are $k_1$, $k_2$, $\cdots$, and $k_L$.

*Start I=1:L*

$$\left[\hat{U}_{k_l}, \hat{Q}_{k_l}, \hat{V}_{k_l}\right] = \mathrm{SVD}(\hat{H}_{k_l}^H \hat{H}_{k_l}) \quad (1)$$

*End*

Herein, $k_l$ indicates an index of a subcarrier, $(\cdot)^H$ indicates conjugate transposition; $\hat{H}_{k_l}$ indicates estimation of an original channel response at a $k_l{}^{th}$ subcarrier; SVD indicates singular value decomposition (singular value decomposition); $\hat{U}_{k_l}$ indicates a left singular matrix corresponding to $\hat{H}_{k_l}^H \hat{H}_{k_l}$; $\hat{Q}_{k_l}$ indicates a singular value matrix corresponding to $\hat{H}_{k_l}^H \hat{H}_{k_l}$ (which is a real diagonal matrix), and is used to represent channel quality; and $\hat{V}_{k_l}$ indicates a right singular matrix corresponding to $\hat{H}_{k_l}^H \hat{H}_{k_l}$.

S304: The STA quantizes and compresses the $\hat{V}$ matrices in step S303.

S305: Feed back quantized and compressed V matrices to the AP (and feed back a $\hat{Q}$ matrix at the same time).

S306: The AP decompresses the $\hat{V}$ matrices fed back by the STA.

S307: The AP performs interpolation on decompressed $\hat{V}$ matrices based on the parameter $Ng$, to obtain $\hat{V}$ matrices at all subcarriers in a full bandwidth.

S308: The AP performs beamforming on the original frequency domain channel based on the $\hat{V}$ matrices in the full bandwidth obtained through interpolation, to generate a TxBF frame.

S309: The AP sends the TxBF frame to the STA.

A signal A (Sig A) part in the TxBF frame indicates beamforming enabling information, and the original frequency domain channel is precoded via the $\hat{V}$ matrix in step S306.

A beamforming process described via a mathematical model is as follows:

$$y = Hs + z \quad (2)$$

In Formula (2), $H$ indicates the original frequency domain channel, $s$ indicates a stream signal generated by Tx, y indicates a signal received by Rx, and $z$ indicates noise.

The STA performs channel estimation to obtain $\hat{H}$, and performs SVD decomposition on $\hat{H}$, that is,

$$[\hat{U}, \hat{Q}, \hat{V}] = \text{SVD}(\hat{H}) \quad (3)$$

After the $\hat{V}$ matrix (the right singular matrix of $H$) is obtained, beamforming is performed on the original frequency domain channel via the $\hat{V}$ matrix (or the TxBF frame is sent), that is,

$$y_{eff} = H\hat{V}s + z = H_{eff}s + z \quad (4)$$

In Formula (4), $H_{eff}$ indicates a precoded equivalent frequency domain channel, and $y_{eff}$ indicates a signal received by the STA.

That is, the equivalent frequency domain channel $H_{eff}$ is obtained by the AP by weighting the original frequency domain channel $H$ via the $\hat{V}$ matrix fed back by the STA.

In the foregoing procedure, $Ng$ is defined, indicating that the $\hat{V}$ matrix is extracted at an interval of $Ng$ subcarriers, to compress a $\hat{V}$ matrix obtained after extraction. This effectively reduces $\hat{V}$ matrix feedback overheads. In addition, the STA may determine, based on beamforming enabling bit information, whether the AP precodes the original frequency domain channel $H$, to provide a reference for whether to perform smooth filtering subsequently.

The AP transmits data on the equivalent frequency domain channel. However, due to existence of non-ideal factors such as environmental noise and receiver noise, an error exists between the equivalent frequency domain channel $\hat{H}_{eff}$ obtained through estimation by the STA and a real value $H_{eff}$. It has been proved that, if the equivalent frequency domain channel $H_{eff}$ is smooth and filterable, a channel estimation error is reduced after smooth filtering, and a performance gain of 2 dB to 3 dB can be increased. Therefore, after beamforming is performed at the transmit end (Tx), smooth filtering is generally performed at the receive end (Rx).

However, in some scenarios, an amplitude or phase jump occurs on the $\hat{V}$ matrix fed back by the STA. As a result, an equivalent frequency domain channel obtained through weighting $H_{eff}$ is no longer "contiguous". Further, a beamforming gain is reduced or even a negative gain is generated.

The following uses an example to describe a case in which the equivalent frequency domain channel obtained through weighting $H_{eff}$ is no longer "contiguous". Simulation conditions are set as shown in Table 1.

**Table 1**

| Channel type | SNR (dB) | Ntx (number of transmit antennas) | Nrx (number of receive antennas) | Nss (number of spatial streams) | SVD mode |
|---|---|---|---|---|---|
| Channel B | 50 | 4 | 2 | 1 | QR-based SVD (QR-based SVD) |

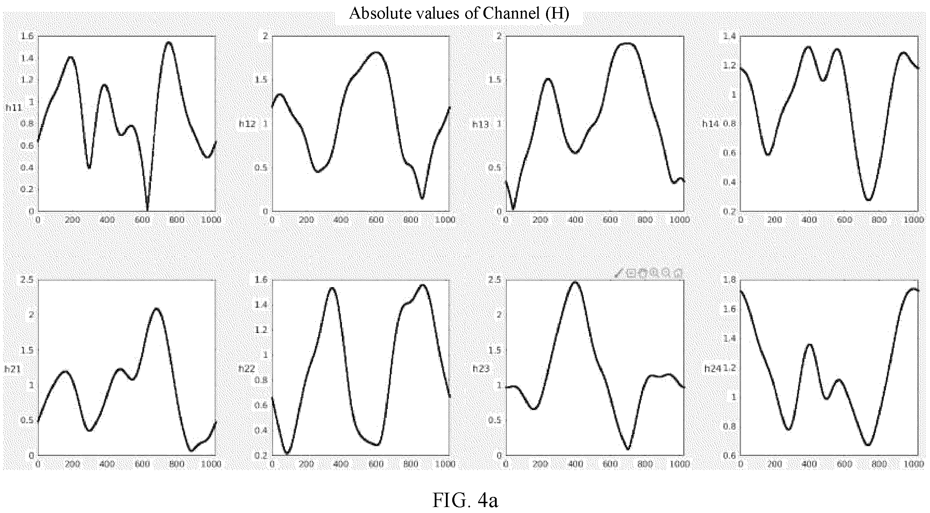

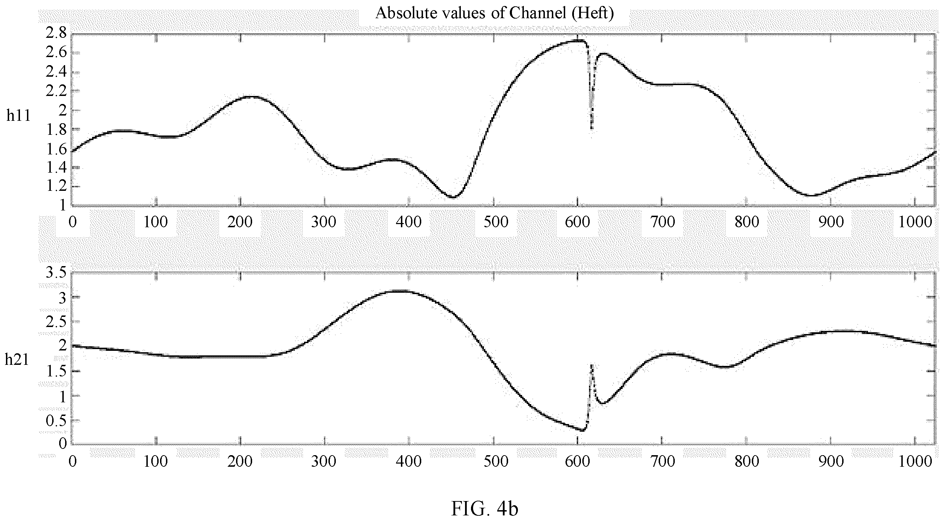

FIG. 4a is a diagram of an example of an amplitude response of an original frequency domain channel $H$ according to an embodiment of this application. FIG. 4b is a diagram of an example of an amplitude response of a precoded equivalent frequency domain channel $H_{eff}$ according to an embodiment of this application. In FIG. 4a and FIG. 4b, a horizontal coordinate indicates a carrier index, and a vertical coordinate indicates a frequency domain channel amplitude.

It can be learned from the foregoing simulation parameters that, because the original frequency domain channel $H \in R^{N_{rx} \times N_{tx}}$, there are eight channels, which respectively correspond to eight pictures in FIG. 4a. Because *Nss= 1,* that is, a dimension of a $V^H$ matrix used for precoding is $N_{tx} \times N_{ss}$, the equivalent frequency domain channel $H_{eff} E R^{N_{rx} \times N_{ss}}$ is obtained, and separately corresponds to two pictures in FIG. 4b.

Through comparison between FIG. 4a and FIG. 4b, it can be obviously seen that an amplitude jump occurs on the equivalent frequency domain channel $H_{eff}$ near a 616th subcarrier. Consequently, smooth filtering cannot be performed in an area near the subcarrier.

It can be learned that, when precoding is performed via the $\hat{V}$ matrix obtained according to the procedure shown in FIG. 3, a problem of a phase jump or an amplitude jump of the $\hat{V}$ matrix in a specific scenario cannot be resolved, that is, a weighted channel $H_{eff}$ is still "discontiguous", and smooth filtering cannot be performed.

For the foregoing problem, this application provides a channel feedback solution. An AP sends a first frame to a STA, where the first frame includes at least one of the following segment information: a first segmentation enabling indication and a first segment number M; and the first segment number M indicates that an equivalent frequency domain channel corresponds to M subband channels; and the AP communicates with the STA based on the at least one piece of segment information. The AP indicates the segment information, so that a channel is smooth in each segment. This increases a beamforming gain.

In a scenario in which an equivalent frequency domain channel $H_{eff}$ is discontiguous, embodiments of this application provide a plurality of technical solutions to improve "contiguity" of a precoded equivalent frequency domain channel $H_{eff}$, and ensure a gain of smooth filtering. Details are described below.

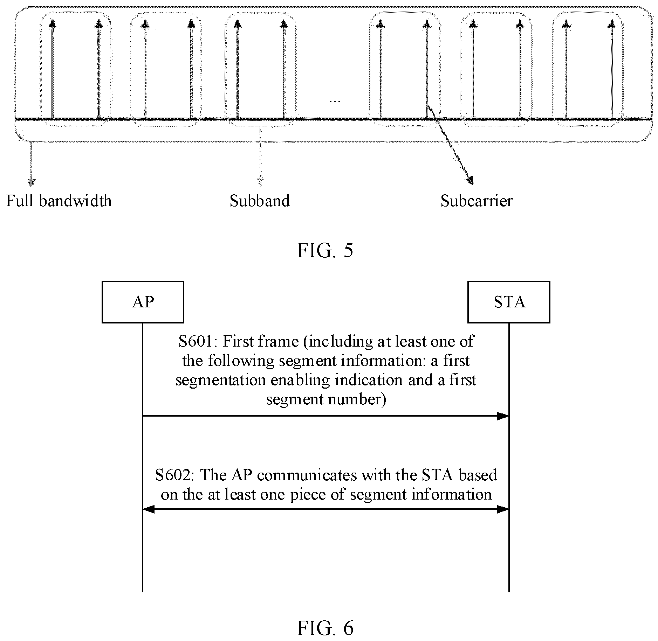

For ease of description, it is assumed that a number of subcarriers in a full bandwidth is K, a number of subband channels (segments) is M, and a number of subcarriers included in each subband channel is N. In this case, K=M×N. FIG. 5 is a diagram of an example of bandwidth division according to an embodiment of this application. Herein, the number of subcarriers in the full bandwidth, the number of subband channels, and the number of subcarriers included in each subband channel are all examples. This is not limited in embodiments of this application.

FIG. 6 is a schematic flowchart of a channel feedback method according to an embodiment of this application. For example, the method may include the following steps.

S601: An AP sends a first frame to a STA.

For the foregoing problem that the equivalent frequency domain channel $H_{eff}$ obtained by the AP by performing beamforming via the V matrix fed back by the STA may be "discontiguous", in this embodiment, the AP sends the first frame to the STA. The first frame includes at least one of the following segment information: a first segmentation enabling indication and a first segment number M. The first frame may be any signal frame for communication between the AP and the STA.

In an example, the first frame may include the first segmentation enabling indication and the first segment number M. For example, the first segmentation enabling indication may be 1 bit. When a value of the 1 bit is "0", it indicates that the AP does not enable segmentation, and M is 0, in other words, segmentation is not performed; or when a value of the 1 bit is "1", it indicates that the AP enables segmentation, and M ≥ 1. Alternatively, when a value of the 1 bit is "1", it indicates that the AP does not enable segmentation, and M is 0, in other words, segmentation is not performed; or when a value of the 1 bit is "0", it indicates that the AP enables segmentation, and M ≥ 1.

In another example, the first frame may alternatively include the first segment number M. The first frame includes the first segment number M, where M is a positive integer greater than 1. In this case, the AP and the STA may consider by default that the AP enables segmentation.

When M ≥ 1, the first segment number M indicates that the equivalent frequency domain channel $H_{eff}$ obtained by the AP by performing beamforming via the $V$ matrix fed back by the STA corresponds to M subband channels, in other words, the equivalent frequency domain channel $H_{eff}$ corresponding to the AP is obtained through weighting based on $\hat{V}$ matrices corresponding to the subband channels obtained through segmentation.

In the foregoing example, it is assumed that K=1024, and an amplitude jump occurs near a 616th subcarrier.

Consequently, smooth filtering cannot be performed in an area near the subcarrier. In this case, the equivalent frequency domain channel $H_{eff}$ corresponding to the AP may be obtained through weighting based on a $\hat{V}$ matrix corresponding to subcarriers 0 to 1023, a $\hat{V}$ matrix corresponding to subcarriers 0 to 511, or a $\hat{V}$ matrix corresponding to subcarriers 512 to 1023.

S602: The AP communicates with the STA based on the at least one piece of segment information.

The AP communicates with the STA based on the equivalent frequency domain channel $H_{eff}$, for example, transmits data on the equivalent frequency domain channel $H_{eff}$.

The STA communicates with the AP on each subband channel in the M subband channels based on the at least one piece of segment information.

For example, because the equivalent frequency domain channel $H_{eff}$ corresponding to the AP is obtained by weighting a $\hat{V}'$ matrix corresponding to "contiguous" subcarriers obtained after segmentation, the STA can perform smooth filtering on each subband channel in the M subband channels obtained through segmentation. This increases a beamforming gain. The $\hat{V}'$ matrix indicates a right singular matrix that corresponds to a subband channel and that is obtained through calculation based on a channel estimation value.

According to the channel feedback method provided in this embodiment of this application, the AP indicates the segment information, so that a channel is smooth in each segment. This increases the beamforming gain.

In different scenarios, the AP may send the at least one piece of segment information in different procedures. The following provides description by using a specific embodiment.

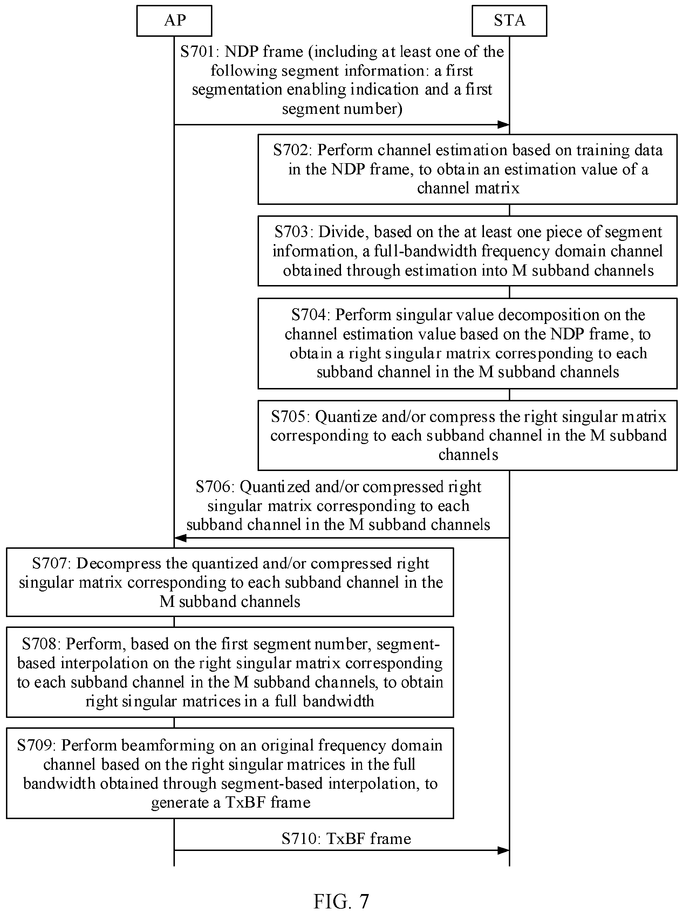

FIG. 7 is a schematic flowchart of another channel feedback method according to an embodiment of this application. For example, the method may include the following steps.

S701: An AP sends NDP frames to a STA.

For example, after association between the AP and the STA is completed, the AP sends an NDPA frame to the STA, to prompt the STA that the AP is about to send an NDP frame after an SIFS. The NDP frame is used to request the STA to perform channel estimation on an original frequency domain channel H.

A difference from the procedures shown in FIG. 2 and FIG. 3 lies in that the AP segments the original frequency domain channel H, and determines that the original frequency domain channel H may correspond to M subband channels.

In addition, the NDP frame further includes at least one of the following segment information: a first segmentation enabling indication and a first segment number M. The first segmentation enabling indication indicates the STA to segment a channel obtained through estimation. The first segment number M indicates that the equivalent frequency domain channel $H_{eff}$ corresponds to the M subband channels, that is, indicates the STA to feed back, based on at least one piece of segment information, a $\hat{V}$ matrix corresponding to each subband channel. That is, the foregoing first frame may be the NDP frame in this embodiment.

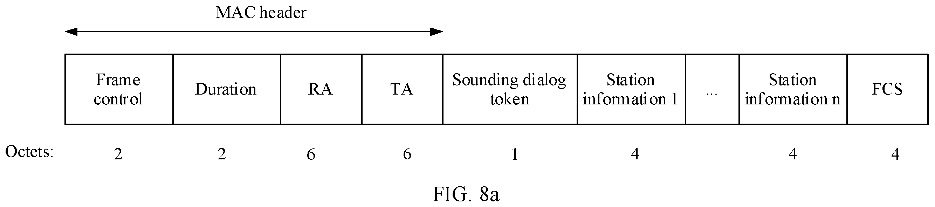

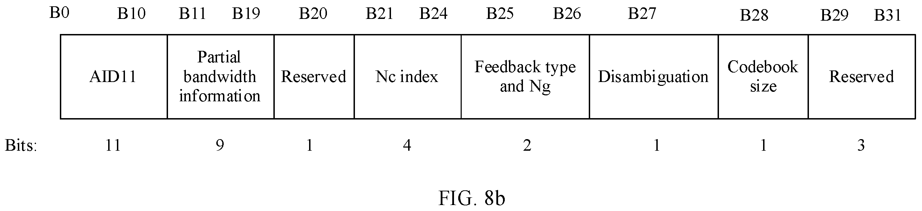

For example, in the 802.11be standard, the NDP frame may be an extremely high throughput (extremely high throughput, EHT) NDPA frame. A format of the EHT NDPA frame is shown in FIG. 8a. The EHT NDPA frame includes the following fields: frame control (frame control), duration (duration), receiver address (receiver address, RA), transmitter address (transmitter address, TA), sounding dialog token (sounding dialog token), station information (STA info) 1, ..., station information n, and frame check sequence (frame check sequence). In this embodiment, the at least one piece of segment information may be located in a station information field (STA info field) of the EHT NDPA frame. A format of the station information field of the EHT NDPA frame is shown in FIG. 8b. The station information field includes the following information: first 11 bits of an association identifier (association identifier 11, AID11), partial bandwidth information (partial BW info), reserved bit (B20), number of columns (corresponding to a number of spatial streams) (number of columns, Nc) index (Nc index), feedback type and V matrix extraction interval Ng, disambiguation (disambiguation), codebook size (codebook size), and reserved bits (B29 to B31). The first segmentation enabling indication may be located at B20 of the station information field, and the first segment number M may be located at B29 to B31 of the station information field. Certainly, a bit location of the segment information is not limited in this embodiment. In addition, it is considered that the first segment number M may be greater than 7. In this case, a total number of bits of the station information field may be further extended, to ensure that the first segment number M is effectively indicated.

S702: After receiving the NDP frame, the STA performs channel estimation based on training data in the NDP frame, to obtain an estimation value $\hat{H}$ of a channel matrix.

The STA completes channel estimation and calculation of a $\hat{V}$ matrix and a $\hat{Q}$ matrix based on the NDP frame sent by the AP. For details, refer to related descriptions of Formula (1). The $\hat{V}$ matrix obtained by the STA through calculation is a $\hat{V}$ matrix in a full bandwidth.

S703: The STA divides the full-bandwidth frequency domain channel $\hat{H}$ obtained through estimation into the M subband channels based on the at least one piece of segment information.

After receiving the NDP frame, the STA parses the NDP frame to obtain the at least one piece of segment information included in the NDP frame. If it is detected that the first segmentation enabling indication indicates the STA to perform segmentation, or the first segment number M is greater than 1, the STA divides the full-bandwidth frequency domain channel $\hat{H}$ obtained through estimation into the M subband channels, where each subband channel corresponds to N subcarriers.

S704: The STA performs singular value decomposition on the channel estimation value $\hat{H}$ based on the NDP frame, to obtain a right singular matrix corresponding to each subband channel in the M subband channels.

The STA calculates, in an SVD decomposition manner on each subband channel in the M subband channels, the $\hat{V}'$ matrix corresponding to each subband channel. A $\hat{V}'$ matrix calculation process is as follows:

Start m = 1:M

$$\left[\hat{U}'_m, \hat{Q}'_m, \hat{V}'_m\right] = \text{SVD}\left[\sum_{n=1}^{N} \hat{H}^H_{(m-1)\times N+n}\hat{H}_{(m-1)\times N+n}\right] \quad (5)$$

End

Herein, $\hat{U}'_m$ indicates a left singular matrix of an mth subband channel; $\hat{Q}'_m$ indicates a singular value matrix corresponding to the mth subband channel; $\hat{V}'_m$ indicates a right singular matrix corresponding to the mth subband channel; and $\hat{H}_{(m-1)\times N+n}$ indicates estimation of an original channel response at an $(m - 1) \times N + n$[th] subcarrier.

S705: The STA quantizes and/or compresses the right singular matrix corresponding to each subband channel in the M subband channels.

After the $\hat{V}'$ matrices corresponding to all the M subband channels are calculated, quantization, extraction, and compression may be performed on the matrices, to reduce feedback overheads. For the quantization, extraction, and compression processes, refer to the quantization, extraction, and compression processes of the $\hat{V}$ matrices in the full bandwidth in the embodiment shown in FIG. 3.

S706: The STA feeds back a quantized and/or compressed right singular matrix corresponding to each subband channel in the M subband channels to the AP.

As shown in FIG. 2, the STA may send, in a compressed beamforming report field, the quantized and/or compressed $\hat{V}$ matrix corresponding to each subband channel in the M subband channels to the AP, and may further send, in a CQI report field, a quantized and/or compressed $\hat{Q}$ matrix to the AP.

S707: The AP decompresses the quantized and/or compressed right singular matrix corresponding to each subband channel in the M subband channels.

For the process, refer to the conventional technology and the description of the embodiment shown in FIG. 3. A difference lies in that the AP obtains, through decompression, the right singular matrix corresponding to each subband channel in the M subband channels.

S708: The AP performs, based on the first segment number M, segment-based interpolation on the right singular matrix corresponding to each subband channel in the M subband channels, to obtain right singular matrices in the full bandwidth.

After the AP obtains, through decompression, the $\hat{V}'$ matrix corresponding to each subband channel in the M subband channels, because the $\hat{V}'$ matrix corresponding to each subband channel in the M subband channels obtained through decompression is a $\hat{V}$ matrix that corresponds to some subcarriers in the subband channel and that is obtained by extracting the $\hat{V}'$ matrix corresponding to each subband channel, the AP may perform, based on the first segment number M, segment-based interpolation on the $\hat{V}'$ matrix corresponding to each subband channel in the M subband channels, to obtain the right singular matrices in the full bandwidth.

Different from the interpolation process shown in FIG. 3, in this embodiment, the AP performs interpolation on the $\hat{V}'$ matrix corresponding to each subband channel, to obtain a $\hat{V}'$ matrix corresponding to all subcarriers in the subband channel, and finally obtains the right singular matrices in the full bandwidth. The full bandwidth herein does not include "discontiguous" subcarriers.

S709: The AP performs beamforming on the original frequency domain channel H based on the right singular matrices in the full bandwidth obtained through segment-based interpolation, to generate a TxBF frame.

The AP performs beamforming on the original frequency domain channel H based on the $\hat{V}$ matrices in the full bandwidth obtained through segment-based interpolation, to generate the TxBF frame. Specifically, weighted calculation is performed via the $\hat{V}$ matrices in the full bandwidth obtained through segment-based interpolation, to obtain the equivalent frequency domain channel $\hat{H}_{eff}$. For details, refer to the description in the foregoing embodiment.

S710: The AP sends the TxBF frame to the STA.

The STA receives the TxBF frame on each subband channel in the M subband channels, and performs smoothing filtering on the channel based on the TxBF frame. In a subsequent procedure, the STA may communicate with the AP based on the channel obtained through smooth filtering.

According to the channel feedback method provided in this embodiment of this application, the AP indicates the segment information in the NDP frame, and indicates the STA to calculate, based on the segment information, the right singular matrix corresponding to each subband channel in the M subband channels obtained through segmentation, to feed back the right singular matrix corresponding to each subband channel in the M subband channels, so that a channel is smooth in each segment. This increases a beamforming gain.

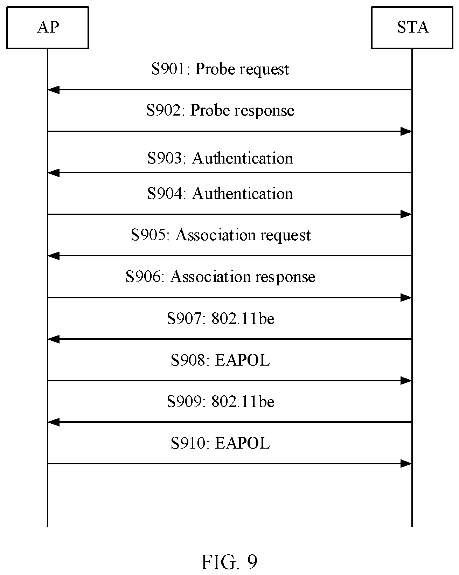

A difference between the embodiment shown in FIG. 7 and the conventional technology is that the STA in this embodiment has a capability of calculating a right singular matrix by segment. Therefore, further, before the method in this embodiment is implemented, in an access and authentication process between the AP and the STA provided in an embodiment of this application shown in FIG. 9, the STA may further feed back, to the AP, that the STA has the capability of calculating the right singular matrix by segment.

Specifically, as shown in FIG. 9, the access and authentication process includes the following steps.

S901: A STA sends a probe request (probe request) to an AP.

S902: The AP sends a probe response (probe response) to the STA.

S903: The STA sends authentication (auth) to the AP.

S904: The AP sends authentication to the STA.

For the foregoing steps S901 to S904, refer to implementation in the conventional technology.

S905: The STA sends an association request (association request) to the AP.

Different from that in the conventional technology, the association request includes indication information indicating that the STA has a capability of calculating a right singular matrix by segment, or the association request indicates that the STA has a capability of calculating a right singular matrix by segment.

For example, a capability (capability) field is included in the association request. Information about a capability item for calculating a right singular matrix by segment may be added to the capability field.

S906: The AP sends an association response (association response) to the STA.

S907: The STA sends 802.11be to the AP.

S908: The AP sends an EAPOL to the STA.

S909: The STA sends 802.11be to the AP.

S910: The AP sends an EAPOL to the STA.

For the foregoing steps S906 to S910, refer to implementation in the conventional technology.

According to the method, the STA sends, to the AP, the indication information indicating that the STA has the capability of calculating the right singular matrix by segment, and the AP may learn that the STA has the capability of calculating the right singular matrix by segment, so that the AP may send the at least one piece of segment information to the STA, to indicate the STA to perform segmentation.

The foregoing embodiment provides description that the AP may include the at least one piece of segment information in an NDP frame. In addition, the AP may further update the at least one piece of segment information via another signal frame. The following provides detailed description by using an embodiment.

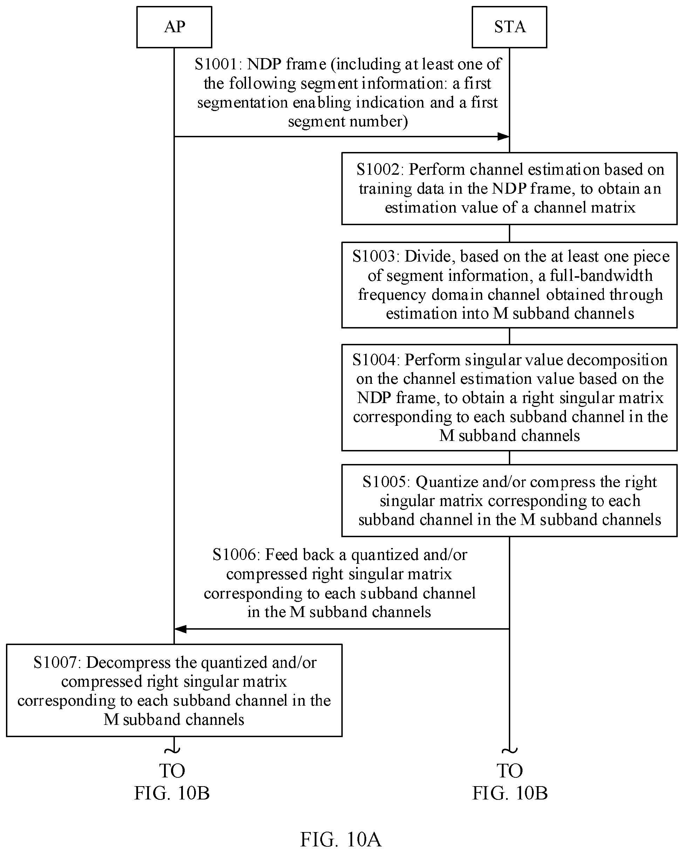

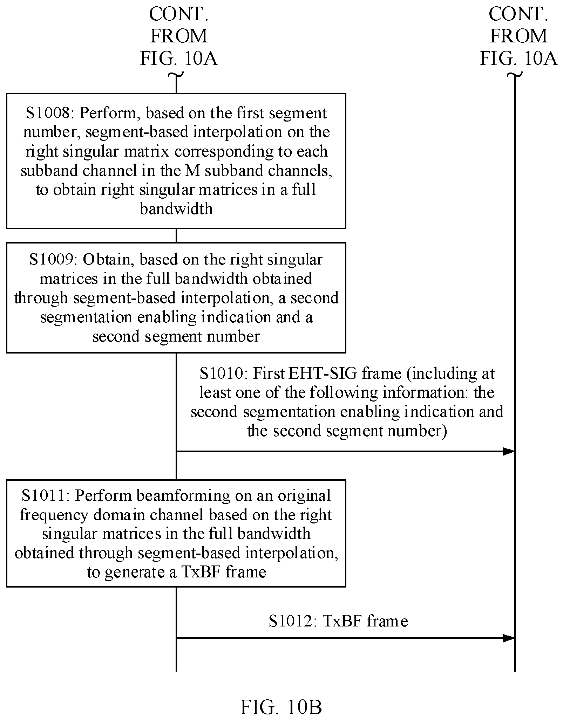

FIG. 10A and FIG. 10B are a schematic flowchart of still another channel feedback method according to an embodiment of this application. For example, the method may include the following steps.

S1001: An AP sends an NDP frame to a STA.

The NDP frame is used to request the STA to perform channel estimation on an original frequency domain channel H, and the original frequency domain channel H corresponds to M subband channels.

The NDP frame includes at least one of the following segment information: a first segmentation enabling indication and a first segment number M. The first segment number M indicates that an equivalent frequency domain channel corresponds to M subband channels.

For specific implementation of this step, refer to step S701 in the embodiment shown in FIG. 7.

S1002: After receiving the NDP frame, the STA performs channel estimation based on training data in the NDP frame, to obtain an estimation value $\hat{H}$ of a channel matrix.

For specific implementation of this step, refer to step S702 in the embodiment shown in FIG. 7.

S1003: The STA divides a full-bandwidth frequency domain channel $\hat{H}$ obtained through estimation into the M subband channels based on the at least one piece of segment information.

For specific implementation of this step, refer to step S703 in the embodiment shown in FIG. 7.

S1004: The STA performs singular value decomposition on the channel estimation value $\hat{H}$ based on the NDP frame, to obtain a right singular matrix corresponding to each subband channel in the M subband channels.

For specific implementation of this step, refer to step S704 in the embodiment shown in FIG. 7.

Alternatively, the STA may indicate, via the foregoing association request, that the STA has a capability of calculating a right singular matrix by segment.

S1005: The STA quantizes and/or compresses the right singular matrix corresponding to each subband channel in the M subband channels.

For specific implementation of this step, refer to step S705 in the embodiment shown in FIG. 7.

S1006: The STA feeds back a quantized and compressed right singular matrix corresponding to each subband channel in the M subband channels to the AP.

For specific implementation of this step, refer to step S706 in the embodiment shown in FIG. 7.

S1007: The AP decompresses the quantized and/or compressed right singular matrix corresponding to each subband channel in the M subband channels.

For specific implementation of this step, refer to step S707 in the embodiment shown in FIG. 7.

S1008: The AP performs, based on the first segment number M, segment-based interpolation on the right singular matrix corresponding to each subband channel in the M subband channels, to obtain right singular matrices in the full bandwidth.

For specific implementation of this step, refer to step S708 in the embodiment shown in FIG. 7.

S1009: The AP obtains a second segmentation enabling indication and a second segment number $M'$ based on the right singular matrices in the full bandwidth obtained through segment-based interpolation.

A difference from the embodiment shown in FIG. 7 lies in that, after obtaining the right singular matrices in the full bandwidth obtained through segment-based interpolation, the AP may further determine the second segmentation enabling indication and the second segment number $M'$ based on the right singular matrices in the full bandwidth obtained through segment-based interpolation.

Specifically, the AP may determine the second segment number $M'$ based on subcarriers in which an amplitude or phase jump occurs in the right singular matrices in the full bandwidth obtained through segment-based interpolation.

For example, it is assumed that the AP detects that no amplitude or phase jump occurs in the right singular matrices in the full bandwidth obtained through segment-based interpolation. In this case, the second segmentation enabling indication is set to "0", to indicate that segmentation is not performed, and right singular matrices at all subcarriers are fed back according to an original protocol.

For another example, it is assumed that the AP detects that two amplitude or phase jumps occur in the right singular matrices in the full bandwidth obtained through segment-based interpolation. In this case, the second segmentation enabling indication is set to "1", to indicate that segmentation is performed, and correspondingly, the second segment number $M' \geq 1$.

The second segment number $M'$ may be the same as or different from the first segment number M.

For example, a number K of subcarriers in the full bandwidth=1000. It is assumed that the first segment number M = 2. In this case, the STA divides, based on the first segment number M, the full-bandwidth frequency domain channel $\hat{H}$ obtained through estimation into two subband channels, and feeds back a right singular matrix corresponding to each subband channel in the two subband channels. After receiving the right singular matrix corresponding to each subband channel in the two subband channels, the AP performs segment-based interpolation based on the first segment number M = 2, to obtain right singular matrices in the full bandwidth. If the AP finds, based on the right singular matrices in the full bandwidth obtained through segment-based interpolation, that the two types of right singular matrices in the full bandwidth are approximately contiguous, the AP may determine the second segment number $M' = 1$, that is, reduce the segment number.

S1010: The AP sends a first extremely high throughput signal (extremely high throughput signal, EHT-SIG) frame to the STA.

The first EHT-SIG frame includes at least one of the following information: the second segmentation enabling indication and the second segment number $M'$.

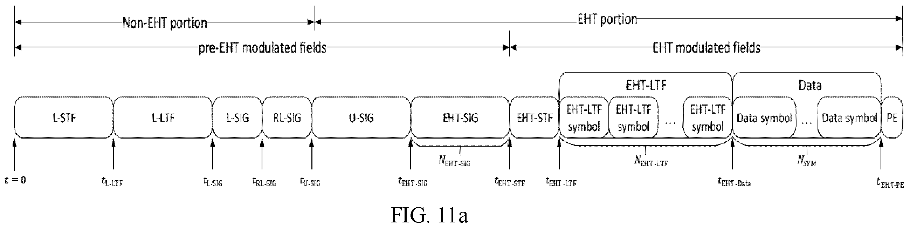

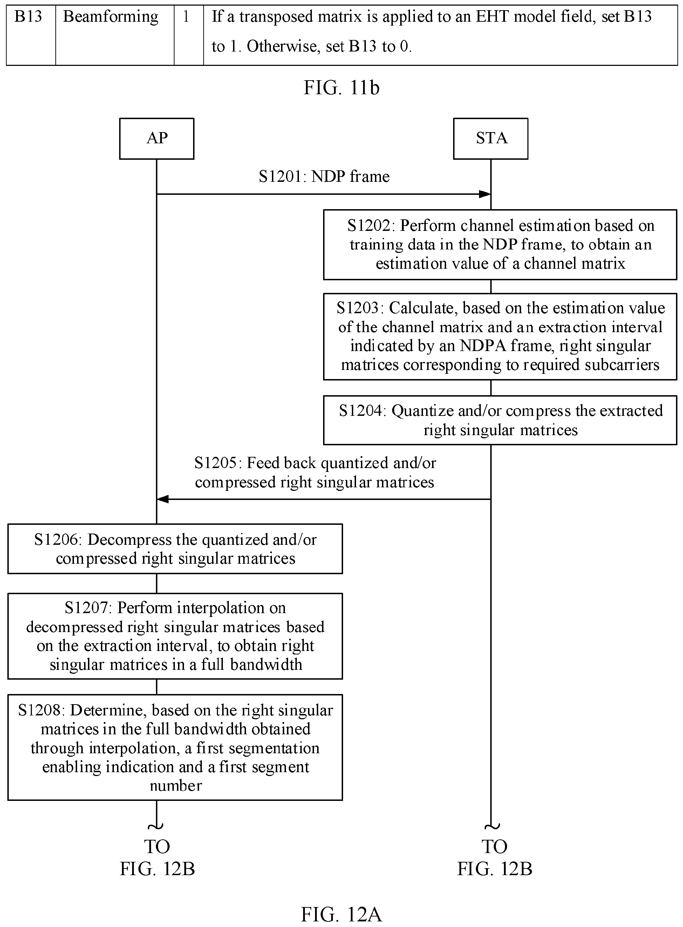

For example, in the 802.11be standard, a format of an EHT physical layer protocol data unit (physical layer protocol data unit, PPDU) is shown in FIG. 11a. The second segmentation enabling indication may be located at a bit B13 of a common field (common field) for non-orthogonal frequency division multiple access (non-orthogonal frequency division multiple access, non-OFDMA) in an EHT-SIG field in the EHT PPDU. A format of the common field for non-orthogonal frequency division multiple access is shown in FIG. 11b. Further, the bit of the common field for non-orthogonal frequency division multiple access may be added to indicate the second segment number $M'$.

S1011: The AP performs beamforming on the original frequency domain channel H based on the right singular matrices in the full bandwidth obtained through segment-based interpolation, to generate a TxBF frame.

For specific implementation of this step, refer to step S709 in the embodiment shown in FIG. 7.

S1012: The AP sends the TxBF frame to the STA.

The STA receives the TxBF frame on each subband channel in the M subband channels, and performs smoothing filtering on the channel based on the TxBF frame. In a subsequent procedure, the STA may communicate with the AP based on the channel obtained through smooth filtering.

A difference from the embodiment shown in FIG. 7 lies in that, the STA can perform smooth filtering based on the first segment number M, or can perform smooth filtering based on the second segment number $M'$.

In an example, it is assumed that the second segment number $M'$ is less than the first segment number M, and the STA performs smooth filtering based on the second segment number $M'$, so that workload of the STA can be reduced. In addition, the second segment number $M'$ is determined by the AP based on the obtained right singular matrices in the full bandwidth obtained through segment-based interpolation. In this way, reliability is higher.

According to the channel feedback method provided in this embodiment of this application, the AP indicates the segment information in the NDP frame, and indicates the STA to calculate, based on the segment information, the right singular matrix corresponding to each subband channel in the M subband channels obtained through segmentation, to feed back the right singular matrix corresponding to each subband channel in the M subband channels, so that a channel is smooth in each segment. This increases a beamforming gain. In addition, the AP determines an updated second segment number based on the right singular matrices in the full bandwidth obtained through segment-based interpolation, and sends the updated second segment number to the STA, so that smooth filtering efficiency of the STA can be improved.

The foregoing embodiment describes the solution in which the STA performs segmentation based on the segmentation information sent by the AP. The following embodiment describes a solution in which the AP performs segmentation.

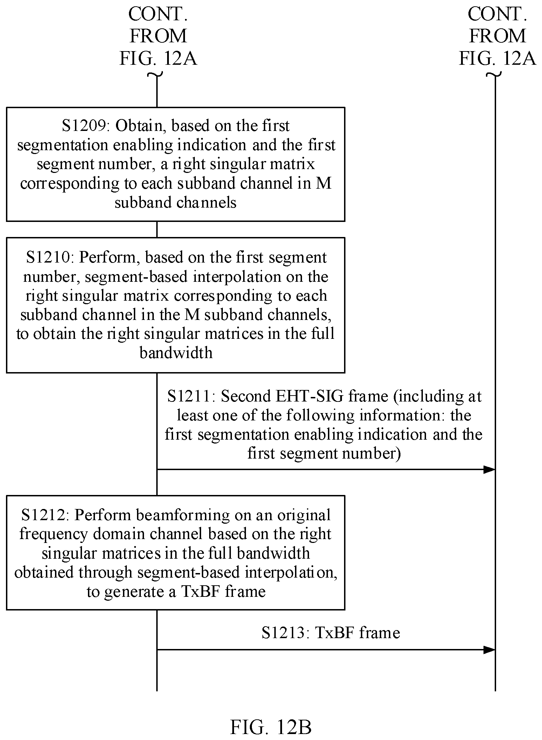

FIG. 12A and FIG. 12B are a schematic flowchart of still another channel feedback method according to an embodiment of this application. For example, the method may include the following steps.

S1201: An AP sends an NDP frame to a STA.

The NDP frame is used to request the STA to perform channel estimation on an original frequency domain channel H.

For specific implementation of this step, refer to step S301 in the embodiment shown in FIG. 3.

S1202: After receiving the NDP frame, the STA performs channel estimation based on training data in the NDP frame, to obtain an estimation value $\hat{H}$ of a channel matrix.

For specific implementation of this step, refer to step S302 in the embodiment shown in FIG. 3.

S1203: The STA calculates, based on the estimation value of the channel matrix and an extraction interval indicated by the NDPA frame, right singular matrices corresponding to required subcarriers.

For specific implementation of this step, refer to step S303 in the embodiment shown in FIG. 3.

S1204: The STA quantizes and/or compresses the extracted right singular matrices.

For specific implementation of this step, refer to step S304 in the embodiment shown in FIG. 3.

S1205: The STA feeds back quantized and/or compressed right singular matrices to the AP.

For specific implementation of this step, refer to step S305 in the embodiment shown in FIG. 3.

S1206: The AP decompresses the quantized and/or compressed right singular matrices.

For specific implementation of this step, refer to step S306 in the embodiment shown in FIG. 3.

S1207: The AP performs interpolation on decompressed right singular matrices based on the extraction interval Ng, to obtain right singular matrices in a full bandwidth.

For specific implementation of this step, refer to step S307 in the embodiment shown in FIG. 3.

S1208: The AP determines a first segmentation enabling indication and a first segment number M based on the right singular matrices in the full bandwidth obtained through interpolation.

Different from the foregoing embodiment, in this embodiment, after the AP obtains the right singular matrices through the interpolation operation in the full bandwidth, the AP determines the first segment number M based on the right singular matrices in the full bandwidth obtained through interpolation.

Specifically, the AP may determine the first segmentation enabling indication and the first segment number M based on subcarriers in which an amplitude or phase jump occurs in the right singular matrices in the full bandwidth obtained through interpolation.

For example, it is assumed that no amplitude or phase jump occurs in the right singular matrices in the full bandwidth obtained through interpolation. In this case, the first segmentation enabling indication is set to "0", to indicate that segmentation is not performed, and right singular matrices at all subcarriers are fed back according to an original protocol.

For another example, it is assumed that two amplitude or phase jumps occur in the right singular matrices in the full bandwidth obtained through interpolation. In this case, the third segmentation enabling indication is set to "1", to indicate that segmentation is performed, and correspondingly, the first segment number M≥1.

In this embodiment, the AP needs to have a capability of calculating a right singular matrix by segment. For example, in the access and authentication procedure shown in FIG. 9, the AP may include, in an association response, indication information indicating that the AP has the capability of calculating the right singular matrix by segment. The AP sends, to the STA, the indication information indicating that the AP has the capability of calculating the right singular matrix by segment, so that the STA may learn that the AP has the capability of calculating the right singular matrix by segment, and the AP may perform segmentation. In this case, the STA can perform smooth filtering based on the segmented channels.

S 1209: The AP obtains, based on the first segmentation enabling indication and the first segment number M, a right singular matrix corresponding to each subband channel in M subband channels.

The AP divides the full bandwidth into the M subband channels based on the first segment number M, and calculates, on each subband channel in the M subband channels in an SVD decomposition manner, the *V* matrix corresponding to each subband channel. A *V* matrix calculation process is as follows:

*For m = 1:M*

$$[\hat{U}'_m, \hat{Q}'_m, \hat{V}'_m] = \text{SVD}\left[\sum_{n=1}^{N} \hat{V}'_{(m-1)\times N+n} \hat{Q}'^2_{(m-1)\times N+n} \hat{V}'^H_{(m-1)\times N+n}\right] \quad (6)$$

*End*

Herein, $\hat{U}'_m$ indicates a left singular matrix ($\hat{U}'$ matrix) corresponding to an m$^{th}$ subband channel; $\hat{Q}'_m$ indicates a singular value matrix ($\hat{Q}'$ matrix) corresponding to the m$^{th}$ subband channel, and is used to represent quality of the m$^{th}$ subband channel; $\hat{V}'_m$ indicates a right singular matrix ($V'$ matrix) corresponding to the m$^{th}$ subband channel; $\hat{V}_{(m-1)\times N+n}$ indicates a right singular matrix at an $(m-1)\times N+n^{th}$ subcarrier fed back by the STA; and $\hat{Q}'^2_{(m-1)\times N+n}$ indicates a square of a singular value matrix at the $(m-1)\times N+n^{th}$ subcarrier fed back by the STA, that is, $\hat{Q}'^2_{(m-1)\times N+n} = \hat{Q}'_{(m-1)\times N+n} \times \hat{Q}'_{(m-1)\times N+n}$.

S 1210: The AP performs, based on the first segment number M, segment-based interpolation on the right singular matrix corresponding to each subband channel in the M subband channels, to obtain the right singular matrices in the full bandwidth.

The AP may perform, based on the first segment number M, segment-based interpolation on the $V'$ matrix corresponding to each subband channel in the M subband channels, to obtain the right singular matrices in the full bandwidth.

Different from the interpolation process shown in FIG. 3, in this embodiment, the AP performs interpolation on the $V'$ matrix corresponding to each subband channel, to obtain a $\hat{V}$ matrix corresponding to all subcarriers in the subband channel, and finally obtains the right singular matrices in the full bandwidth. The full bandwidth herein does not include "discontiguous" subcarriers.

S1211: The AP sends a second EHT-SIG frame to the STA.

The second EHT-SIG frame includes at least one of the following information: the first segmentation enabling indication and the first segment number M.

For meanings of the first segmentation enabling indication and the first segment number M, refer to descriptions of step S601 in the embodiment shown in FIG. 6 and step S701 in the embodiment shown in FIG. 7.

The first segmentation enabling indication may be located at a bit B13 of a common field for non-orthogonal frequency division multiple access in an EHT-SIG field in an EHT PPDU. Further, the bit of the common field for non-orthogonal frequency division multiple access may be added to indicate the first segment number M.

S1212: The AP performs beamforming on the original frequency domain channel H based on the right singular matrices in the full bandwidth obtained through segment-based interpolation, to generate a TxBF frame.

For specific implementation of this step, refer to step S709 in the embodiment shown in FIG. 7 or step S1011 in the embodiment shown in FIG. 10A and FIG. 10B.

A difference from step S308 in the embodiment shown in FIG. 3 lies in that, the AP performs beamforming on the original frequency domain channel H based on the $V'$ matrices in the full bandwidth obtained through segment-based interpolation, to generate the TxBF frame. Specifically, weighted calculation is performed via the $V'$ matrices in the full bandwidth obtained through segment-based interpolation, to obtain an equivalent frequency domain channel $\hat{H}_{eff}$.

S1213: The AP sends the TxBF frame to the STA.

The STA receives the TxBF frame on each subband channel in the M subband channels, and performs smoothing filtering on the channel based on the TxBF frame. In a subsequent procedure, the STA may communicate with the AP based on the channel obtained through smooth filtering.

According to the channel feedback method provided in this embodiment of this application, after receiving extracted right singular matrices fed back by the STA in the full bandwidth, the AP determines the first segment number M based on the extracted right singular matrices in the full bandwidth; obtains, based on the first segment number M, the right singular matrix corresponding to each subband channel in the M subband channels; performs, based on the first segment number M, segment-based interpolation on the right singular matrix corresponding to each subband channel in the M subband channels, to obtain the right singular matrices in the full bandwidth; and performs beamforming on the original frequency domain channel H based on the right singular matrices in the full bandwidth obtained through segment-based interpolation, to generate and send the TxBF frame, so that the STA can receive the TxBF frame on each subband channel in the M subband channels, and perform smooth filtering on the channel based on the TxBF frame. This increases a beamforming gain.

The foregoing embodiment describes the solution in which the AP performs segmentation. In the following embodiment, the STA may alternatively perform segmentation, and feed back a segment number determined by the STA to the AP.

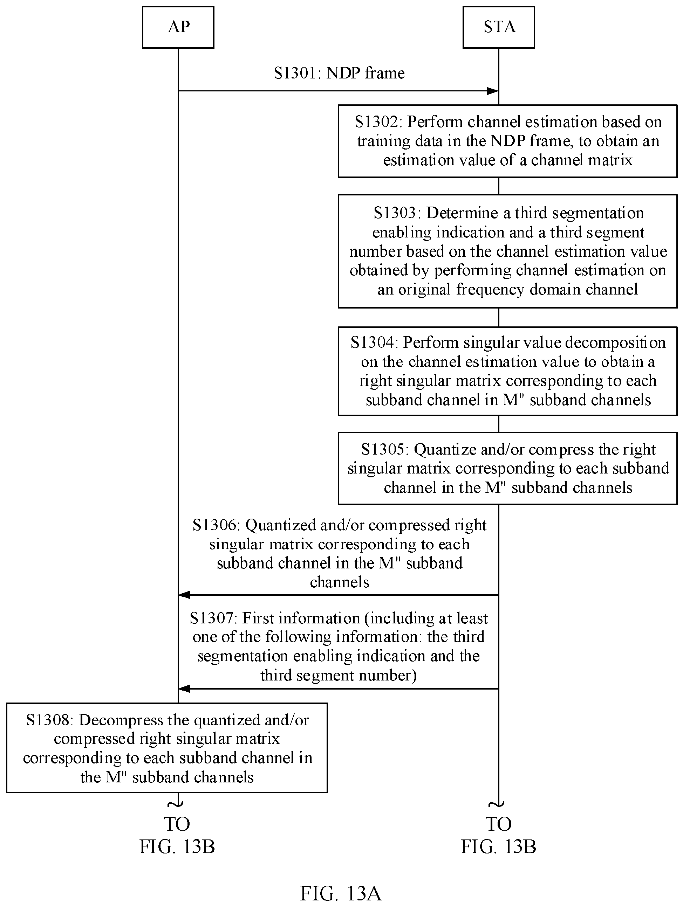

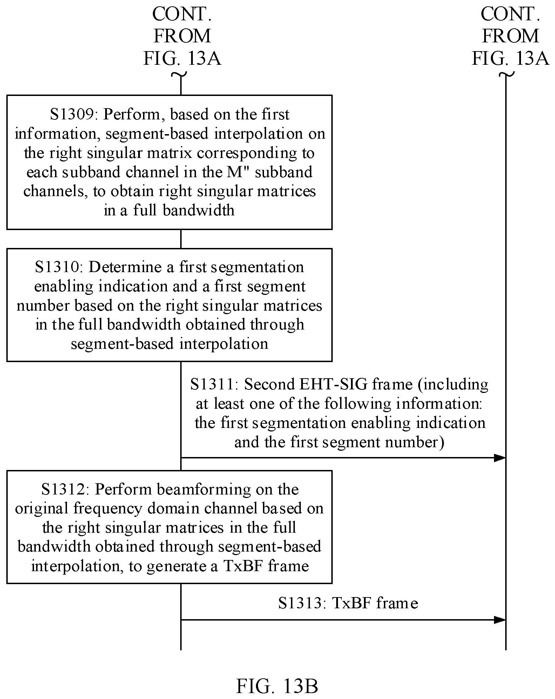

FIG. 13A and FIG. 13B are a schematic flowchart of still another channel feedback method according to an embodiment of this application. For example, the method may include the following steps.

S1301: An AP sends an NDP frame to a STA.

The NDP frame is used to request the STA to perform channel estimation on an original frequency domain channel H.

For specific implementation of this step, refer to step S301 in the embodiment shown in FIG. 3.

S1302: After receiving the NDP frame, the STA performs channel estimation based on training data in the NDP frame, to obtain an estimation value $\hat{H}$ of a channel matrix.

For specific implementation of this step, refer to step S302 in the embodiment shown in FIG. 3.

S1303: The STA determines a third segmentation enabling indication and a third segment number $M''$ based on the channel estimation value $\hat{H}$ obtained by performing channel estimation on the original frequency domain channel.

For example, the STA may determine the third segmentation enabling indication and the third segment number $M''$ based on subcarriers in which an amplitude or phase jump occurs on the channel $\hat{H}$ obtained through estimation.

For example, it is assumed that no amplitude or phase jump occurs on the channel $\hat{H}$ obtained through estimation. In this case, the third segmentation enabling indication is set to "0", to indicate that segmentation is not performed, and right singular matrices at all subcarriers are fed back according to an original protocol.

For another example, it is assumed that two amplitude or phase jumps exist on the channel $\hat{H}$ obtained through estimation. In this case, the third segmentation enabling indication is set to "1", to indicate that segmentation is performed, and correspondingly, the third segment number $M'' > 3$.

Alternatively, the STA may indicate, via the foregoing association request, that the STA has a capability of calculating a right singular matrix by segment.

S1304: The STA performs singular value decomposition on the channel estimation value $\hat{H}$, to obtain a right singular matrix corresponding to each subband channel in $M''$ subband channels.

If the STA determines to perform segmentation, the STA divides a full-bandwidth frequency domain channel $\hat{H}$ obtained through estimation into the $M''$ subband channels, where each subband channel corresponds to N" subcarriers.

The STA calculates, in an SVD decomposition manner on each subband channel in the M subband channels, the $V$ matrix corresponding to each subband channel. For a $V$ matrix calculation process, refer to the description of step S704 in the embodiment shown in FIG. 7.

S1305: The STA quantizes and/or compresses the right singular matrix corresponding to each subband channel in the $M''$ subband channels.

After the $V'$ matrices corresponding to all the $M''$ subband channels are calculated, quantization, extraction, and compression may be performed on the matrices, to reduce feedback overheads. For the quantization, extraction, and compression processes, refer to the quantization, extraction, and compression processes of the $V'$ matrices in the full bandwidth in the embodiment shown in FIG. 3.

S1306: The STA sends a quantized and/or compressed right singular matrix corresponding to each subband channel in the $M''$ subband channels to the AP.

As shown in FIG. 2, the STA may send, in a compressed beamforming report field, the quantized and/or compressed $V'$ matrix corresponding to each subband channel in the $M''$ subband channels to the AP, and may further send, in a CQI report field, a quantized and/or compressed $Q'$ matrix to the AP.

S1307: The STA sends first information to the AP.

The first information includes at least one of the following information: the third segmentation enabling indication and the third segment number $M''$.

In an example, the first information may include the third segmentation enabling indication and the third segment number $M''$. For example, the third segmentation enabling indication may be 1 bit. When a value of the 1 bit is "0", it indicates that the STA does not enable segmentation, and $M''$ is 1; or when a value of the 1 bit is "1", it indicates that the STA enables segmentation, and $M'' > 1$. Alternatively, when a value of the 1 bit is "1", it indicates that the STA does not enable segmentation, and $M''$ is 1; or when a value of the 1 bit is "0", it indicates that the STA enables segmentation, and $M'' > 1$.

In another example, the first information may alternatively include the third segment number $M''$. The first information includes the third segment number $M''$, where $M''$ is a positive integer greater than 1. In this case, the AP and the STA may consider by default that segmentation is enabled.

For example, in the 802.11be standard, the STA may include at least one of the following information in an extremely high throughput compressed beamforming report (EHT compressed beamforming report) field: the third segmentation enabling indication and the third segment number $M''$.

An extremely high throughput compressed beamforming report field in the original protocol is mainly used to feed back a $Q$ matrix and a $V$ matrix for quantization and compression, and does not include information about a segment number or information about whether to enable segmentation. In this embodiment, the extremely high throughput compressed beamforming report field may be extended to include the third segmentation enabling indication and the third segment number $M''$. For example, P bits may be added to the end of the extremely high throughput compressed beamforming report field, a first bit in the P bits indicates segmentation enabling, and the remaining P-1 bits indicate the third segment number *M"*.

S1308: The AP decompresses the quantized and/or compressed right singular matrix corresponding to each subband channel in the *M"* subband channels.

For the process, refer to the conventional technology and the description of the embodiment shown in FIG. 3. A difference lies in that the AP obtains, through decompression, the right singular matrix corresponding to each subband channel in the M subband channels.

S1309: The AP performs, based on the first information, segment-based interpolation on the right singular matrix corresponding to each subband channel in the *M"* subband channels, to obtain right singular matrices in the full bandwidth.

After the AP obtains, through decompression, the *V'* matrix corresponding to each subband channel in the *M"* subband channels, because the *V'* matrix corresponding to each subband channel in the *M"* subband channels obtained through decompression is a $\hat{V}$ matrix that corresponds to some subcarriers in the subband channel and that is obtained by extracting the *V'* matrix corresponding to each subband channel, the AP may perform, based on the third segment number *M"*, segment-based interpolation on the *V'* matrix corresponding to each subband channel in the *M"* subband channels, to obtain the right singular matrices in the full bandwidth.

Different from the interpolation process shown in FIG. 3, in this embodiment, the AP performs interpolation on the $\hat{V}$ matrix corresponding to each subband channel, to obtain a $\hat{V'}$ matrix corresponding to all subcarriers in the subband channel, and finally obtains the right singular matrices in the full bandwidth. The full bandwidth herein does not include "discontiguous" subcarriers.

S1310: The AP determines a first segmentation enabling indication and a first segment number M based on the right singular matrices in the full bandwidth obtained through segment-based interpolation.

After obtaining the right singular matrices in the full bandwidth obtained through segment-based interpolation, the AP may further determine the first segmentation enabling indication and the first segment number M based on the right singular matrices in the full bandwidth obtained through segment-based interpolation.

Specifically, the AP may determine the first segmentation enabling indication and the first segment number M based on subcarriers in which an amplitude or phase jump occurs in the right singular matrices in the full bandwidth obtained through segment-based interpolation.

For example, it is assumed that the AP detects that no amplitude or phase jump occurs in the right singular matrices in the full bandwidth obtained through segment-based interpolation. In this case, the first segmentation enabling indication is set to "0", to indicate that segmentation is not performed, and the right singular matrices at all the subcarriers are fed back according to the original protocol.

For another example, it is assumed that the AP detects that two amplitude or phase jumps occur in the right singular matrices in the full bandwidth obtained through segment-based interpolation. In this case, the first segmentation enabling indication is set to "1", to indicate that segmentation is performed, and correspondingly, the first segment number M > 3.

The first segment number M may be the same as or different from the third segment number *M"*.

For example, a number K of subcarriers in the full bandwidth=1000. It is assumed that the third segment number *M"* = 2. In this case, the STA divides, based on the third segment number *M"*, the full-bandwidth frequency domain channel $\hat{H}$ obtained through estimation into two subband channels, and feeds back a right singular matrix corresponding to each subband channel in the two subband channels. After receiving the right singular matrix corresponding to each subband channel in the two subband channels, the AP performs, based on the third segment number *M"*, segment-based interpolation on the *V'* matrices fed back by the STA, to obtain the right singular matrices corresponding to all the subcarriers in the full bandwidth. If the AP finds, based on the right singular matrices in the full bandwidth, obtained through segment-based interpolation that two types of right singular matrices in the full bandwidth are approximately contiguous, the AP may determine that the first segment number *M* = 1.

S1311: The AP sends a second EHT-SIG frame to the STA.

The second EHT-SIG frame includes at least one of the following information: the first segmentation enabling indication and the first segment number M.

For example, the first segmentation enabling indication may be located at a bit B13 of a common field for non-orthogonal frequency division multiple access in an EHT-SIG field in an EHT PPDU. A format of the common field for non-orthogonal frequency division multiple access is shown in FIG. 11b. Further, the bit of the common field for non-orthogonal frequency division multiple access may be added to indicate the first segment number M.

S1312: The AP performs beamforming on the original frequency domain channel H based on the right singular matrices in the full bandwidth obtained through segment-based interpolation, to generate a TxBF frame.

The AP performs beamforming on the original frequency domain channel H based on the $\hat{V}$ matrices in the full bandwidth obtained through segment-based interpolation, to generate the TxBF frame. Specifically, weighted calculation is performed via the $\hat{V}$ matrices in the full bandwidth obtained through segment-based interpolation, to obtain an equivalent frequency domain channel $\hat{H}_{eff}$. For details, refer to the description in the foregoing embodiment.

S1313: The AP sends the TxBF frame to the STA.

The STA receives the TxBF frame on each subband channel in the M subband channels, and performs smoothing filtering on the channel based on the TxBF frame. In a subsequent procedure, the STA may communicate with the AP based on the channel obtained through smooth filtering.

According to the channel feedback method provided in this embodiment of this application, the STA autonomously determines the segment information, calculates a right singular matrix by segment, and feeds back, to the AP, the right singular matrix corresponding to each subband channel in the M subband channels, so that the AP can obtain the right singular matrices in the full bandwidth obtained through segment-based interpolation, where the full bandwidth does not include "discontiguous" subcarriers. The AP can perform beamforming on the original frequency domain channel H based on the right singular matrices in the full bandwidth obtained through segment-based interpolation, and generate and send the TxBF frame, so that the STA can perform smooth filtering, and a beamforming gain is increased. In addition, the AP determines at least one of segment information based on the right singular matrices in the full bandwidth obtained through segment-based interpolation, and sends the at least one piece of segment information to the STA, so that the STA can perform reliable smooth filtering based on the at least one piece of segment information.

The foregoing embodiment provides description that the AP or the STA determines the segment information, to implement smooth filtering on a STA side and increase the beamforming gain. The following embodiment provides description that both the AP and the STA can determine segment information.

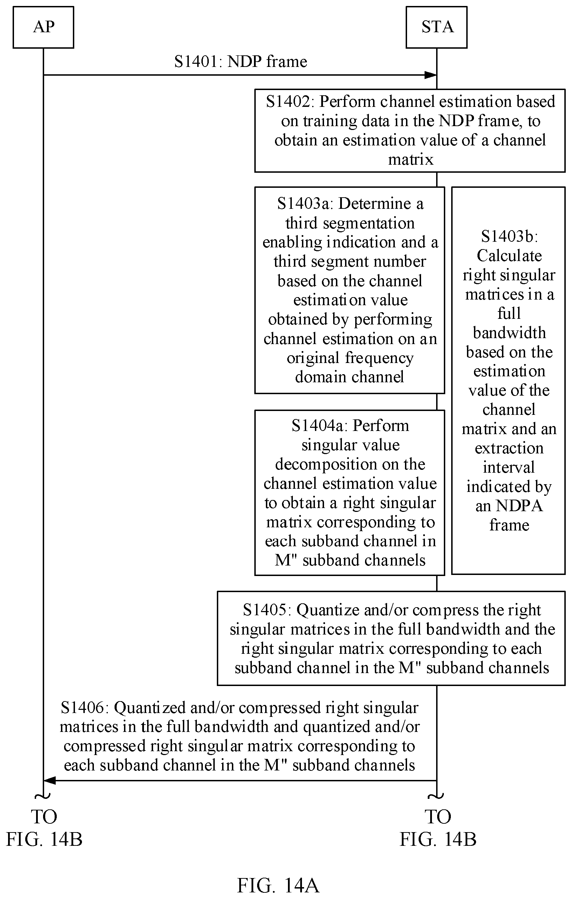

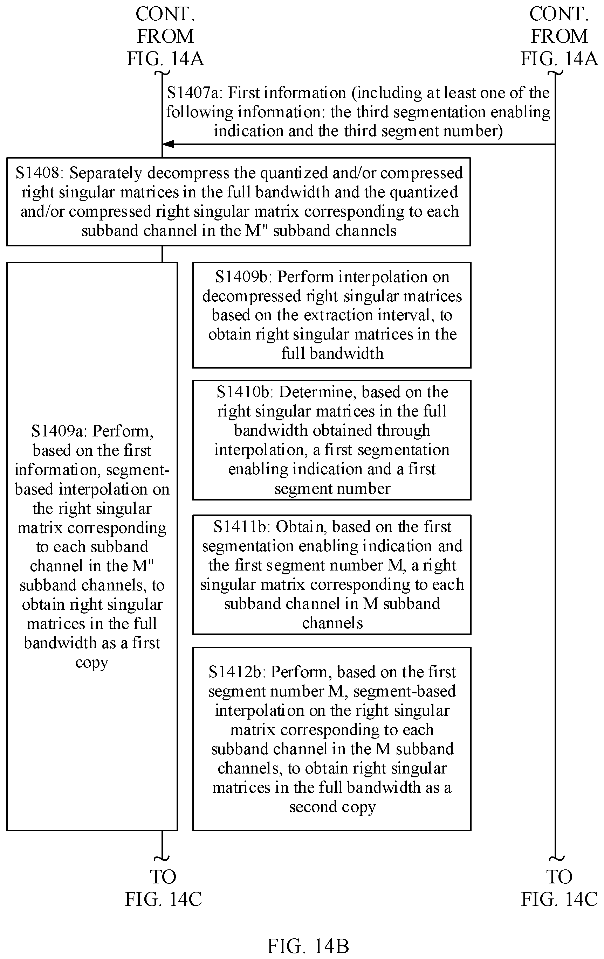

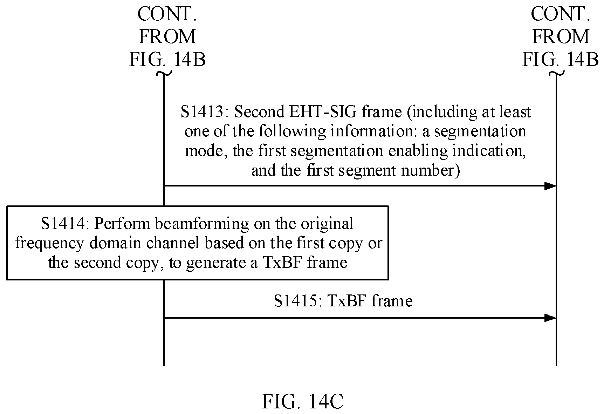

FIG. 14A to FIG. 14C are a schematic flowchart of still another channel feedback method according to an embodiment of this application. For example, the method may include the following steps.

S1401: An AP sends an NDP frame to a STA.

The NDP frame is used to request the STA to perform channel estimation on an original frequency domain channel H.

For specific implementation of this step, refer to step S301 in the embodiment shown in FIG. 3.

S1402: After receiving the NDP frame, the STA performs channel estimation based on training data in the NDP frame, to obtain an estimation value $\hat{H}$ of a channel matrix.

For specific implementation of this step, refer to step S302 in the embodiment shown in FIG. 3.

This embodiment includes the following two branch procedures:

Branch procedure 1:

S1403a: The STA determines a third segmentation enabling indication and a third segment number $M''$ based on the channel estimation value $\hat{H}$ obtained by performing channel estimation on the original frequency domain channel.

For specific implementation of this step, refer to step S1303 in the embodiment shown in FIG. 13A and FIG. 13B.

S1404a: The STA performs singular value decomposition on the channel estimation value $\hat{H}$, to obtain a right singular matrix corresponding to each subband channel in $M''$ subband channels.

For specific implementation of this step, refer to step S1304 in the embodiment shown in FIG. 13A and FIG. 13B.

S1405: The STA quantizes and/or compresses the right singular matrix corresponding to each subband channel in the $M''$ subband channels.

For specific implementation of this step, refer to step S1305 in the embodiment shown in FIG. 13A and FIG. 13B.

S1406: The STA sends a quantized and/or compressed right singular matrix corresponding to each subband channel in the $M''$ subband channels to the AP.

For specific implementation of this step, refer to step S1306 in the embodiment shown in FIG. 13A and FIG. 13B.

S1407a: The STA sends first information to the AP.

The first information includes at least one of the following information: the third segmentation enabling indication and the third segment number $M''$.

For specific implementation of this step, refer to step S1307 in the embodiment shown in FIG. 13A and FIG. 13B.

S1408: The AP decompresses the quantized and/or compressed right singular matrix corresponding to each subband channel in the $M''$ subband channels.

For specific implementation of this step, refer to step S1308 in the embodiment shown in FIG. 13A and FIG. 13B.

S1409a: The AP performs, based on the first information, segment-based interpolation on the right singular matrix corresponding to each subband channel in the $M''$ subband channels, to obtain right singular matrices in a full bandwidth as a first copy.

For specific implementation of this step, refer to step S1309 in the embodiment shown in FIG. 13A and FIG. 13B.

Branch procedure 2:

S1403b: The STA calculates, based on the estimation value of the channel matrix and an extraction interval indicated by an NDPA frame, right singular matrices corresponding to required subcarriers.

For specific implementation of this step, refer to step S303 in the embodiment shown in FIG. 3.

S 1405: The STA quantizes and/or compresses the extracted right singular matrices.

For specific implementation of this step, refer to step S304 in the embodiment shown in FIG. 3.

S1406: The STA feeds back quantized and/or compressed right singular matrices to the AP.

For specific implementation of this step, refer to step S305 in the embodiment shown in FIG. 3.

S1408: The AP decompresses the quantized and/or compressed right singular matrices.

For specific implementation of this step, refer to step S306 in the embodiment shown in FIG. 3.

S 1409b: The AP performs interpolation on decompressed right singular matrices based on the extraction interval Ng, to obtain right singular matrices in the full bandwidth.

For specific implementation of this step, refer to step S307 in the embodiment shown in FIG. 3.

S1410b: The AP determines a first segmentation enabling indication and a first segment number M based on the right singular matrices in the full bandwidth obtained through interpolation.

For specific implementation of this step, refer to step S1208 in the embodiment shown in FIG. 12A and FIG. 12B.

S1411b: The AP obtains, based on the first segmentation enabling indication and the first segment number M, a right singular matrix corresponding to each subband channel in M subband channels.

For specific implementation of this step, refer to step S1209 in the embodiment shown in FIG. 12A and FIG. 12B.

S1412b: The AP performs, based on the first segment number M, segment-based interpolation on the right singular matrix corresponding to each subband channel in the M subband channels, to obtain right singular matrices in the full bandwidth as a second copy.

S1413: The AP sends a second EHT-SIG frame to the STA.

The second EHT-SIG frame includes at least one of the following information: a segmentation mode, the first segmentation enabling indication, and the first segment number M.

For meanings of the first segmentation enabling indication and the first segment number M, refer to descriptions of step S601 in the embodiment shown in FIG. 6 and step S701 in the embodiment shown in FIG. 7.

The segmentation mode indicates the AP to perform beamforming based on the first copy or the second copy. For example, the segmentation mode may be 1 bit. When a value of the 1 bit is "0", it indicates that the AP performs beamforming based on the first copy; or when a value of the 1 bit is "1", it indicates that the AP performs beamforming based on the second copy. Alternatively, when a value of the 1 bit is "1", it indicates that the AP performs beamforming based on the first copy; or when a value of the 1 bit is "0", it indicates that the AP performs beamforming based on the second copy.

Because the third segment number and the first segment number may be the same or different, a right singular matrix that corresponds to the first copy and that is obtained based on the third segment number may also be the same or different from a right singular matrix that corresponds to the second copy and that is obtained based on the first segment number. The segmentation mode may accurately indicate that the AP performs beamforming based on the first copy or the second copy.

The first segmentation enabling indication may be located at a bit B13 of a common field for non-orthogonal frequency division multiple access in an EHT-SIG field in an EHT PPDU. Further, the bit of the common field for non-orthogonal frequency division multiple access may be added to indicate the segmentation mode and the first segment number M.

S1414: The AP performs beamforming on the original frequency domain channel H based on the first copy or the second copy, to generate a TxBF frame.

S1415: The AP sends the TxBF frame to the STA.

After receiving the second EHT-SIG frame, the STA may determine, based on the segmentation mode indicated by the second EHT-SIG frame, that the AP performs beamforming based on the first copy or the second copy, to perform smooth filtering on a corresponding segmented channel. This improves accuracy of smooth filtering.

According to the channel feedback method provided in this embodiment of this application, both the AP and the STA can determine the segment information, and the AP can independently determine to perform beamforming based on the first copy or the second copy. This improves beamforming flexibility.

Different from that shown in FIG. 13A and FIG. 13B, in the following embodiment, the AP may alternatively not send the segment information to the STA.

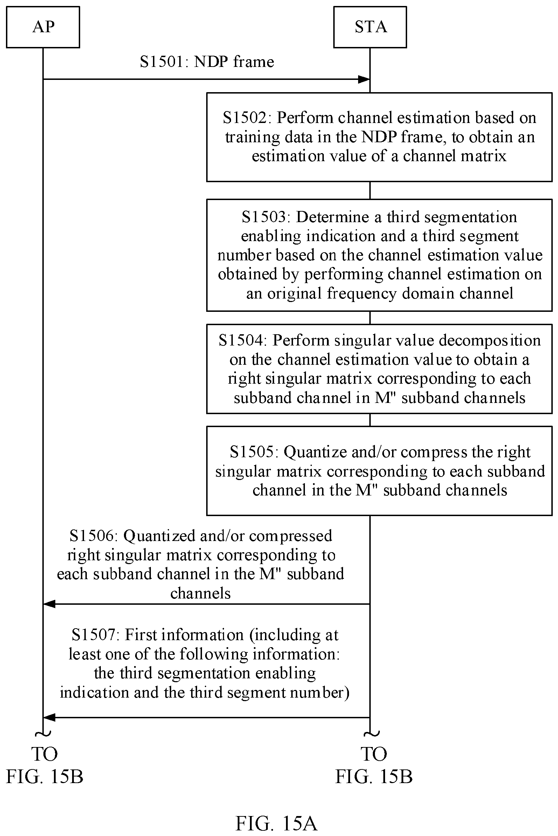

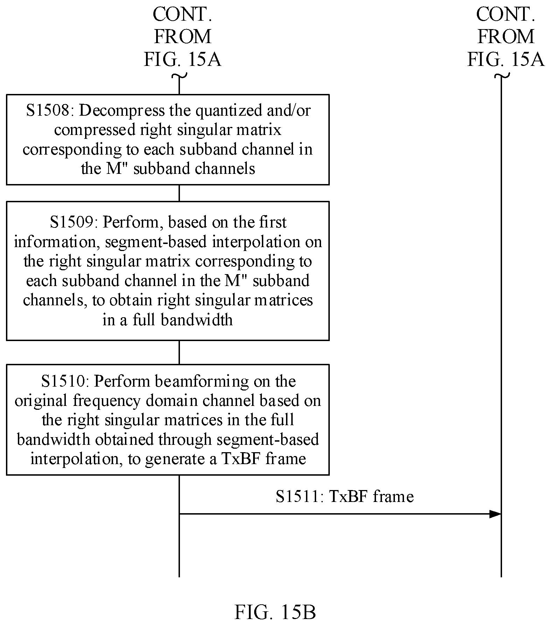

FIG. 15A and FIG. 15B are a schematic flowchart of still another channel feedback method according to an embodiment of this application. For example, the method may include the following steps.

S1501: An AP sends an NDP frame to a STA.

For specific implementation of this step, refer to step S301 in the embodiment shown in FIG. 3 or step S1301 in the embodiment shown in FIG. 13A and FIG. 13B.

S1502: After receiving the NDP frame, the STA performs channel estimation based on training data in the NDP frame, to obtain an estimation value $\hat{H}$ of a channel matrix.

For specific implementation of this step, refer to step S302 in the embodiment shown in FIG. 3 or step S1302 in the embodiment shown in FIG. 13A and FIG. 13B.

S1503: The STA determines a third segmentation enabling indication and a third segment number $M''$ based on the channel estimation value $\hat{H}$ obtained by performing channel estimation on an original frequency domain channel.

For specific implementation of this step, refer to step S1303 in the embodiment shown in FIG. 13A and FIG. 13B.

Alternatively, the STA may indicate, via the foregoing association request, that the STA has a capability of calculating a right singular matrix by segment.

S1504: The STA performs singular value decomposition on the channel estimation value $\hat{H}$ to obtain a right singular matrix corresponding to each subband channel in $M''$ subband channels.

For specific implementation of this step, refer to step S1304 in the embodiment shown in FIG. 13A and FIG. 13B.

S1505: The STA quantizes and/or compresses the right singular matrix corresponding to each subband channel in the $M''$ subband channels.

For specific implementation of this step, refer to step S1305 in the embodiment shown in FIG. 13A and FIG. 13B.

S1506: The STA sends a quantized and/or compressed right singular matrix corresponding to each subband channel in the $M''$ subband channels to the AP.

For specific implementation of this step, refer to step S1306 in the embodiment shown in FIG. 13A and FIG. 13B.

S1507: The STA sends first information to the AP.

The first information includes at least one of the following information: the third segmentation enabling indication and the third segment number $M''$.

For specific implementation of this step, refer to step S1307 in the embodiment shown in FIG. 13A and FIG. 13B.

S1508: The AP decompresses the quantized and/or compressed right singular matrix corresponding to each subband channel in the $M''$ subband channels.

For specific implementation of this step, refer to step S1308 in the embodiment shown in FIG. 13A and FIG. 13B.

S1509: The AP performs, based on the first information, segment-based interpolation on the right singular matrix corresponding to each subband channel in the $M''$ subband channels, to obtain right singular matrices in a full bandwidth.

For specific implementation of this step, refer to step S1309 in the embodiment shown in FIG. 13A and FIG. 13B.

S1510: The AP performs beamforming on the original frequency domain channel H based on the right singular matrices in the full bandwidth obtained through segment-based interpolation, to generate a TxBF frame.

For specific implementation of this step, refer to step S709 in the embodiment shown in FIG. 7 or step S1312 in the embodiment shown in FIG. 13A and FIG. 13B.

S1511: The AP sends the TxBF frame to the STA.

The STA receives the TxBF frame on each subband channel in the $M''$ subband channels, and performs smoothing filtering on the channel based on the TxBF frame. In a subsequent procedure, the STA may communicate with the AP based on the channel obtained through smooth filtering.

According to the channel feedback method provided in this embodiment of this application, the STA autonomously determines the segment information, calculates the right singular matrix by segment, and feeds back, to the AP, the right singular matrix corresponding to each subband channel in the M subband channels, so that the AP can obtain the right singular matrices in the full bandwidth obtained through segment-based interpolation, where the full bandwidth does not include "discontiguous" subcarriers. The AP can perform beamforming on the original frequency domain channel H based on the right singular matrices in the full bandwidth obtained through segment-based interpolation, and generate and send the TxBF frame, so that the STA can perform smooth filtering. This increase a beamforming gain.

The foregoing embodiment provides description that improvement is performed on an AP side or on both an AP side and a STA side to increase the beamforming gain. In the following embodiment, improvement may alternatively be performed only on a STA side to increase the beamforming gain.

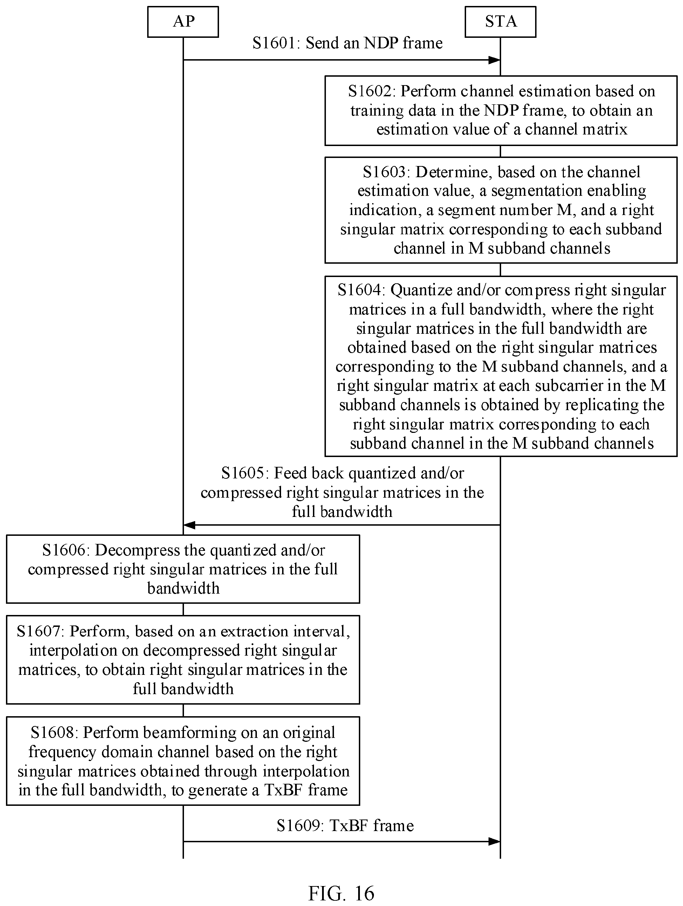

FIG. 16 is a schematic flowchart of still another channel feedback method according to an embodiment of this application. For example, the method may include the following steps.

S1601: An AP sends an NDP frame to a STA.

The NDP frame is used to request the STA to perform channel estimation on an original frequency domain channel H. The original frequency domain channel H corresponds to M subband channels.

For specific implementation of this step, refer to step S301 in the embodiment shown in FIG. 3.

S1602: The STA performs channel estimation based on training data in the NDP frame, to obtain an estimation value $\hat{H}$ of a channel matrix.

For specific implementation of this step, refer to step S302 in the embodiment shown in FIG. 3.

S1603: The STA determines, based on the channel estimation value $\hat{H}$, a segmentation enabling indication, a segment number M, and a $\hat{V}$ matrix corresponding to each subband channel in the M subband channels.

For example, the STA may determine the segmentation enabling indication and the segment number M based on subcarriers in which an amplitude or phase jump occurs on a channel $\hat{H}$ obtained through estimation.

For example, it is assumed that no amplitude or phase jump occurs on the channel $\hat{H}$ obtained through estimation. In this case, the segmentation enabling indication is set to "0", to indicate that segmentation is not performed, and right singular matrices at all subcarriers are fed back according to an original protocol.

For another example, it is assumed that two amplitude or phase jumps exist on the channel $\hat{H}$ obtained through estimation. In this case, the segmentation enabling indication is set to "1", to indicate that segmentation is performed, and correspondingly, the segment number M ≥ 1.

Alternatively, the STA may indicate, via the foregoing association request, that the STA has a capability of calculating a right singular matrix by segment.

If the STA determines to perform segmentation, the STA divides a full-bandwidth frequency domain channel $\hat{H}$ obtained through estimation into the M subband channels, where each subband channel corresponds to N subcarriers.

The STA calculates, in an SVD decomposition manner on each subband channel in the M subband channels, the $\hat{V}$ matrix corresponding to each subband channel. For a $\hat{V}$ matrix calculation process, refer to the description of step S704 in the embodiment shown in FIG. 7.

Alternatively, the STA may indicate, via the foregoing association request, that the STA has the capability of calculating the right singular matrix by segment.

S 1604: The STA quantizes and/or compresses $\hat{V}$ matrices in a full bandwidth, where the $\hat{V}$ matrices in the full bandwidth are obtained based on the $\hat{V}$ matrices corresponding to the M subband channels, and a $\hat{V}$ matrix at each subcarrier on the M subband channels is obtained by replicating the $\hat{V}'$ matrix corresponding to each subband channel in the M subband channels.

Different from the embodiment shown in FIG. 3, in this embodiment, the $\hat{V}$ matrices in the full bandwidth are obtained based on the $\hat{V}$ matrices corresponding to the M subband channels. The $\hat{V}'$ matrix corresponding to each subband channel in the M subband channels is obtained by replicating the $\hat{V}'$ matrix corresponding to each subband channel in the M subband channels.

For example, it is assumed that a number K of subcarriers in the full bandwidth=1000, the STA determines that the segment number M=10, and a number N of subcarriers included in each subband channel=100. The STA divides the full-bandwidth frequency domain channel $\hat{H}$ obtained through estimation into 10 subband channels, and each subband channel corresponds to 100 subcarriers. The STA calculates, in an SVD decomposition manner on each subband channel in the 10 subband channels, $\hat{V}$ matrices corresponding to each subband channel, and 10 types of $\hat{V}'$ matrices can be obtained. For each subband channel, the STA replicates the $\hat{V}'$ matrices corresponding to each subband channel to obtain $\hat{V}$ matrices corresponding to 100 subcarriers in the subband channel. After all the subband channels are processed, right singular matrices ($\hat{V}$ matrices) corresponding to a total of 1000 subcarriers in the full bandwidth can be finally obtained. It is assumed that an extraction interval Ng of the $\hat{V}$ matrices=4, the STA extracts the 1000 $\hat{V}$ matrices at an interval of 4, and finally obtains 250 extracted $\hat{V}$ matrices. The STA quantizes and/or compresses the 250$\hat{V}V$ matrices.

S 1605: The STA feeds back quantized and/or compressed $\hat{V}$ matrices in the full bandwidth to the AP.

Different from the embodiment shown in FIG. 3, the quantized and/or compressed $\hat{V}$ matrices in the full bandwidth are obtained based on the $\hat{V}'$ matrices corresponding to the M subband channels. The $\hat{V}$ matrix at each subcarrier on the M subband channels is obtained by replicating the $\hat{V}'$ matrix corresponding to each subband channel in the M subband channels.

S 1606: The AP decompresses the quantized and/or compressed$\hat{V}V$ matrices in the full bandwidth.

S1607: The AP performs interpolation on decompressed $\hat{V}$ matrices in the full bandwidth based on the extraction interval, to obtain right singular matrices at all the subcarriers in the full bandwidth.

The$\hat{V}V$ matrices obtained by the AP through decompression in the full bandwidth are obtained based on the$\hat{V}V$ matrices corresponding to the M subband channels. The $\hat{V}$ matrix corresponding to each subband channel in the M subband channels is obtained by replicating the $\hat{V}$ matrix corresponding to each subband channel in the M subband channels. The full bandwidth does not include "discontiguous" subcarriers.

S1608: The AP performs beamforming on the original frequency domain channel based on the $\hat{V}$ matrices in the full bandwidth obtained through interpolation, to generate a TxBF frame.

The AP can perform beamforming via the $\hat{V}$ matrices fed back by the STA in the full bandwidth. The full bandwidth does not include "discontiguous" subcarriers, so that the STA can perform smooth filtering. This increases a beamforming gain.

S1609: The AP sends the TxBF frame to the STA.

The STA receives the TxBF frame on each subband channel in the M subband channels, and performs smoothing filtering on the channel based on the TxBF frame. In a subsequent procedure, the STA may communicate with the AP based on the channel obtained through smooth filtering.

According to the channel feedback method provided in this embodiment of this application, the STA determines the segment information based on the channel estimation value, and determines, based on the segment information, the $\hat{V}$ matrix corresponding to each subband channel in the M subband channels. The STA feeds back the quantized and/or compressed $\hat{V}$ matrices in the full bandwidth to the AP, where the $\hat{V}$ matrices in the full bandwidth are obtained based on the $\hat{V}$ matrices corresponding to the M subband channels, and the $\hat{V}$ matrix corresponding to each subband channel in the M subband channels is obtained by replicating the $\hat{V}$ matrix corresponding to each subband channel in the M subband channels. In this way, the AP can perform beamforming via the $\hat{V}$ matrices fed back by the STA in the full bandwidth, and the full bandwidth does not include "discontiguous" subcarriers, so that the STA can perform smooth filtering. This increases the beamforming gain.

The foregoing describes the solutions provided in embodiments of this application. It may be understood that, to implement the foregoing functions, the channel feedback apparatus (for example, an AP or a STA) includes a corresponding hardware structure and/or software module for performing each function. A person skilled in the art should easily be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the channel feedback apparatus may be divided into functional modules based on the foregoing method examples. For example, functional modules may be obtained through division based on corresponding functions, or at least two functions may be integrated into one processing module. The functional module may be implemented in a form of hardware, or may be implemented in a form of a software functional module. It should be noted that, in embodiments of this application, division into modules is an example, and is merely logical function division. In actual implementation, another division manner may be used. The following uses an example in which functional modules are obtained through division based on corresponding functions for description.

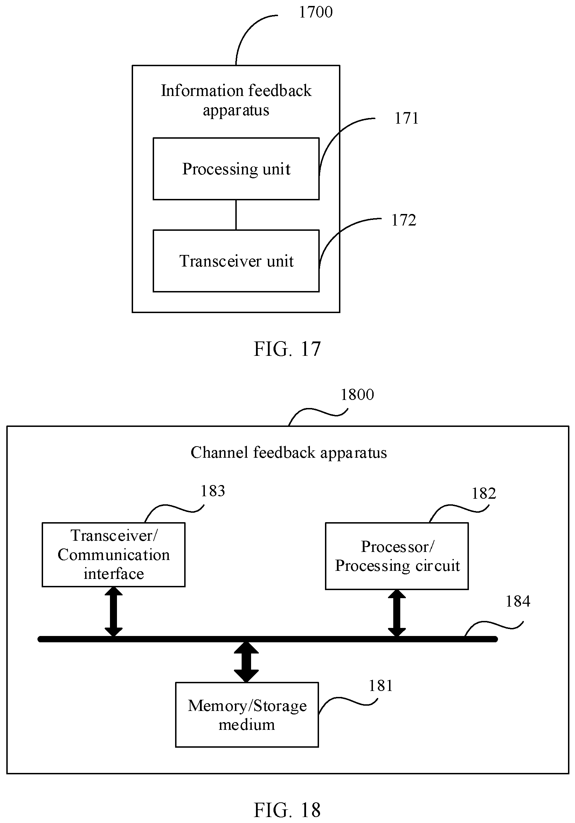

A diagram of a possible structure of a channel feedback apparatus is shown in FIG. 17. A channel feedback apparatus 1700 includes a processing unit 171 and a transceiver unit 172.

In an embodiment, the channel feedback apparatus 1700 is configured to perform operations performed by the AP in the foregoing method embodiments. In this case, the processing unit 171 is configured to support the channel feedback apparatus to perform steps S707 to S709 in the foregoing embodiment, or perform steps S1007 to S1009 and S1011, or perform steps S1206 to S1210 and S1212, or perform steps S1308 to S1310 and S1312. The transceiver unit 172 is configured to support the channel feedback apparatus to perform the steps performed by the AP in S601 and S602 in the foregoing embodiment, or perform the steps performed by the AP in S701, S706, and S710, or perform steps performed by the AP in S1001, S1006, S1010, and S1012, or perform steps performed by the AP in S1201, S1205, S1211, and S1213, or perform steps performed by the AP in S1301, S1306, S1307, S1311, and S1313, or perform steps performed by the AP in S1401, S1406, S1407a, S1413, and S1415, or perform steps performed by the AP in S1501, S1506, S1507, and S1512, or perform steps performed by the AP in S1601, S1605, and S1609.

In an embodiment, the channel feedback apparatus 1700 is configured to perform operations performed by the STA in the foregoing method embodiments. In this case, the processing unit 171 is configured to support the channel feedback apparatus to perform steps S702 to S705 in the foregoing embodiment, or perform steps S1002 to S1005, or perform steps S1202 to S1204, or perform steps S1302 to S1305, or perform steps S1402, S1403a, S1404a, S1403b, and S1405, or perform steps S1502 to S1505, or perform steps S1602 to S1604. The transceiver unit 172 is configured to support the channel feedback apparatus to perform the steps performed by the STA in S601 and S602 in the foregoing embodiment, or perform the steps performed by the STA in S701, S706, and S710, or perform the steps performed by the STA in S1001, S1006, S1010, and S1012, or perform the steps performed by the STA in S1201, S1205, S1211, and S1213, or perform the steps performed by the STA in S1301, S1306, S1307, S1311, and S1313, or perform steps performed by the STA in S1401, S1406, S1407a, S1413, and S1415, or perform steps performed by the STA in S1501, S1506, S1507, and S1512, or perform steps performed by the STA in S1601, S1605, and S1609.

All related content of each step involved in the foregoing method embodiment may be referenced to a function description of a corresponding functional module, and details are not described herein again.

Based on the channel feedback apparatus provided in this embodiment of this application, the channel feedback apparatus transmits a first frame, where the first frame includes at least one of the following segment information: a first segmentation enabling indication and a first segment number M; and the first segment number M indicates that an equivalent frequency domain channel corresponds to M subband channels; and performs communication based on the at least one piece of segment information. The segment information is indicated, so that a channel is smooth in each segment. This increases a beamforming gain.

In a possible product form, a channel feedback apparatus 1800 may be an information transmission device. The channel feedback device includes a processor 182 and a transceiver 183. Optionally, the channel feedback device may further include a memory 181.

In an embodiment, the channel feedback device is configured to perform operations performed by the AP in the foregoing method embodiments. In this case, the processor 182 is configured to control and manage an action of the channel feedback apparatus. For example, the processor 182 is configured to support the channel feedback apparatus to perform steps S707 to S709 in the foregoing embodiment, or perform steps S1007 to S1009 and S1011, or perform steps S1206 to S1210 and S1212, or perform steps S1308 to S1310 and S1312; and/or is configured to perform another technical process described in this specification. The transceiver 183 is configured to support the channel feedback apparatus to perform the steps performed by the AP in S601 and S602 in the foregoing embodiment, or perform the steps performed by the AP in S701, S706, and S710, or perform the steps performed by the AP in S1001, S1006, S1010, and S1012, or perform the steps performed by the AP in S1201, S1205, S1211, and S1213, or perform the steps performed by the AP in S1301, S1306, S1307, S1311, and S1313, or perform the steps performed by the AP in S1401, S1406, S1407a, S1413, and S1415, or perform the steps performed by the AP in S1501, S1506, S1507, and S1512, or perform the steps performed by the AP in S1601, S1605, and S1609.

In an embodiment, the channel feedback device is configured to perform operations performed by the STA in the foregoing method embodiments. In this case, the processor 182 is configured to control and manage an action of the channel feedback apparatus. For example, the processor 182 is configured to support the channel feedback apparatus to perform steps S702 to S705 in the foregoing embodiment, or perform steps S1002 to S1005, or perform steps S1202 to S1204, or perform steps S1302 to S1305, or perform steps S1402, S1403a, S1404a, S1403b, and S1405, or perform steps S1502 to S1505, or perform steps S1602 to S1604; and/or is configured to perform another technical process described in this specification. The transceiver 183 is configured to support the channel feedback apparatus to perform the steps performed by the STA in S601 and S602 in the foregoing embodiment, or perform the steps performed by the STA in S701, S706, and S710, or perform the steps performed by the STA in S1001, S1006, S1010, and S1012, or perform the steps performed by the STA in S1201, S1205, S1211, and S1213, or perform the steps performed by the STA in S1301, S1306, S1307, S1311, and S1313, or perform steps performed by the STA in S1401, S1406, S1407a, S1413, and S1415, or perform steps performed by the STA in S1501, S1506, S1507, and S1512, or perform steps performed by the STA in S1601, S1605, and S1609.

In another possible product form, the channel feedback apparatus 1800 may be an information transmission board. The channel feedback board includes a processor 182 and a transceiver 183. Optionally, the channel feedback board may further include a memory 181.

In an embodiment, the channel feedback board is configured to perform operations performed by the AP in the foregoing method embodiments. In this case, the processor 182 is configured to control and manage an action of the channel feedback apparatus. For example, the processor 182 is configured to support the channel feedback apparatus to perform steps S707 to S709 in the foregoing embodiment, or perform steps S1007 to S1009 and S1011, or perform steps S1206 to S1210 and S1212, or perform steps S1308 to S1310 and S1312; and/or is configured to perform another technical process described in this specification. The transceiver 183 is configured to support the channel feedback apparatus to perform the steps performed by the AP in S601 and S602 in the foregoing embodiment, or perform the steps performed by the AP in S701, S706, and S710, or perform the steps performed by the AP in S1001, S1006, S1010, and S1012, or perform the steps performed by the AP in S1201, S1205, S1211, and S1213, or perform the steps performed by the AP in S1301, S1306, S1307, S1311, and S1313, or perform the steps performed by the AP in S1401, S1406, S1407a, S1413, and S1415, or perform the steps performed by the AP in S1501, S1506, S1507, and S1512, or perform the steps performed by the AP in S1601, S1605, and S1609.

In an embodiment, the channel feedback board is configured to perform operations performed by the STA in the foregoing method embodiments. The processor 182 is configured to control and manage an action of the channel feedback apparatus. For example, the processor 182 is configured to support the channel feedback apparatus to perform steps S702 to S705 in the foregoing embodiment, or perform steps S1002 to S1005, or perform steps S1202 to S1204, or perform steps S1302 to S1305, or perform steps S1402, S1403a, S1404a, S1403b, and S1405, or perform steps S1502 to S1505, or perform steps S1602 to S1604; and/or is configured to perform another technical process described in this specification. The transceiver 183 is configured to support the channel feedback apparatus to perform the steps performed by the STA in S601 and S602 in the foregoing embodiment, or perform the steps performed by the STA in S701, S706, and S710, or perform the steps performed by the STA in S1001, S1006, S1010, and S1012, or perform the steps performed by the STA in S1201, S1205, S1211, and S1213, or perform the steps performed by the STA in S1301, S1306, S1307, S1311, and S1313, or perform the steps performed by the STA in S1401, S1406, S1407a, S1413, and S1415, or perform the steps performed by the STA in S1501, S1506, S1507, and S1512, or perform the steps performed by the STA in S1601, S1605, and S1609.

In another possible product form, the channel feedback apparatus is alternatively implemented by a general-purpose processor, namely, a chip. The general-purpose processor includes a processing circuit 182 and a communication interface 183. Optionally, the general-purpose processor may further include a storage medium 181.

In another possible product form, the channel feedback apparatus may alternatively be implemented by using one or more field programmable gate arrays (field programmable gate arrays, FPGAs), a programmable logic device (programmable logic device, PLD), a controller, a state machine, gate logic, a discrete hardware component, any other suitable circuit, or any combination of circuits capable of performing various functions described throughout this application.

The processor 182 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the digital signal processor and a microprocessor. A bus 184 may be a peripheral component interconnect (peripheral component interconnect, PCI) bus, an extended industry standard architecture (extended industry standard architecture, EISA) bus, and or the like. The bus may be classified into an address bus, a data bus, a control bus, and the like. For ease of representation, only one bold line is used to represent the bus in FIG. 18, but this does not mean that there is only one bus or only one type of bus.

Based on the channel feedback apparatus provided in this embodiment of this application, the channel feedback apparatus transmits a first frame, where the first frame includes at least one of the following segment information: a first segmentation enabling indication and a first segment number M; and the first segment number M indicates that an equivalent frequency domain channel corresponds to M subband channels; and performs communication based on the at least one piece of segment information. The segment information is indicated, so that a channel is smooth in each segment. This increases a beamforming gain.

A person of ordinary skill in the art may understand that all or a part of the steps in the method embodiments may be completed by a program instructing relevant hardware. The program instructions may be stored in a computer-readable storage medium. When the program instructions are executed, the steps in the foregoing method embodiments are performed. The storage medium includes any medium that can store program code, for example, a USB flash drive, a removable hard disk, a read-only memory (read-only memory, ROM), a random access memory (random access memory, RAM), a magnetic disk, or an optical disk.

According to one aspect, an embodiment of this application further provides a readable storage medium. The readable storage medium stores computer-executable instructions. A device (which may be a single chip, a chip, a controller, or the like) or a processor performs the steps in the channel feedback method provided in this application.

According to one aspect, an embodiment of this application further provides a computer program product. The computer program product includes computer-executable instructions. The computer-executable instructions are stored in a computer-readable storage medium. At least one processor of a device may read the computer-executable instructions from the computer-readable storage medium. The at least one processor executes the computer-executable instructions, so that the device performs the steps in the channel feedback method provided in this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, division into the units is merely logical function division and may be another division in actual implementation. For example, a plurality of units or components may be combined or integrated into another system, or some features may be ignored or not performed. The displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a special-purpose computer, a computer network, or another programmable apparatus. The computer instructions may be stored in a computer-readable storage medium, or transmitted through the computer-readable storage medium. The computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, like a server or a data center that integrates one or more usable media. The usable medium may be a ROM, a RAM, or a magnetic medium, for example, a floppy disk, a hard disk, a magnetic tape, or a magnetic disk, an optical medium, for example, a digital versatile disc (digital versatile disc, DVD), a semiconductor medium, for example, a solid-state disk (solid-state disk, SSD), or the like.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects, and indicates that three relationships may exist. For example, A and/or B may indicate the following cases: A exists alone, both A and B exist, and B exists alone, where A and B may be singular or plural. In the text descriptions of this application, the character "/" indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

**Claims**

1. A channel feedback method, wherein the method comprises:

   sending a first frame to a station, wherein the first frame comprises at least one of the following segment information: a first segmentation enabling indication and a first segment number M; and the first segment number M indicates that an equivalent frequency domain channel corresponds to M subband channels; and
   communicating with the station based on the at least one piece of segment information.

2. The method according to claim 1, wherein the first frame comprises a null data packet NDP frame, the NDP frame is used to request the station to perform channel estimation on an original frequency domain channel H, and the original frequency domain channel H corresponds to M subband channels.

3. The method according to claim 1 or 2, wherein the method further comprises:
   receiving a right singular matrix corresponding to each subband channel in the M subband channels from the station.

4. The method according to claim 3, wherein the method further comprises:

   performing, based on the first segment number M, segment-based interpolation on the right singular matrix corresponding to each subband channel in the M subband channels, to obtain right singular matrices in a full bandwidth;
   obtaining a second segmentation enabling indication and a second segment number $M'$ based on the right singular matrices in the full bandwidth obtained through segment-based interpolation; and
   sending a first extremely high throughput signal EHT-SIG frame to the station, wherein the first EHT-SIG frame comprises at least one of the following information: the second segmentation enabling indication and the second segment number $M'$.

5. The method according to claim 1, wherein the first frame comprises a second extremely high throughput signal EHT-SIG frame.

6. The method according to claim 5, wherein the method further comprises:

   receiving quantized and/or compressed right singular matrices in a full bandwidth from the station; and
   determining the first segment number M based on the quantized and/or compressed right singular matrices in the full bandwidth.

7. The method according to claim 5 or 6, wherein the method further comprises:

   obtaining, based on the first segment number M, a right singular matrix corresponding to each subband channel in the M subband channels; and
   performing, based on the first segment number M, segment-based interpolation on the right singular matrix corresponding to each subband channel in the M subband channels, to obtain right singular matrices in the full bandwidth.

8. The method according to claim 5, wherein the method further comprises:

receiving a right singular matrix corresponding to each subband channel in $M''$ subband channels from the station; and

receiving first information from the station, wherein the first information comprises at least one of the following information: a third segmentation enabling indication and a third segment number $M''$.

9. The method according to claim 8, wherein the method further comprises:

performing, based on the first information, segment-based interpolation on the right singular matrix corresponding to each subband channel in the $M''$ subband channels, to obtain right singular matrices in a full bandwidth; and determining the first segment number M based on the right singular matrices in the full bandwidth obtained through segment-based interpolation.

10. The method according to any one of claims 1 to 9, wherein the communicating with the station based on the at least one piece of segment information comprises:

performing, based on the first segment number M, segment-based interpolation on the right singular matrix corresponding to each subband channel in the M subband channels, to obtain the right singular matrices in the full bandwidth;

performing beamforming on the original frequency domain channel H based on the right singular matrices in the full bandwidth, to generate a transmit beamforming frame; and sending the transmit beamforming frame to the station.

11. The method according to claim 5, wherein the method further comprises:

receiving, from the station, quantized and/or compressed right singular matrices in a full bandwidth and a right singular matrix corresponding to each subband channel in $M''$ subband channels; receiving first information from the station, wherein the first information comprises at least one of the following information: a third segmentation enabling indication and a third segment number $M''$; performing, based on the third segment number $M''$, segment-based interpolation on the right singular matrix corresponding to each subband channel in the $M''$ subband channels, to obtain right singular matrices in the full bandwidth as a first copy; determining the first segmentation enabling indication and the first segment number M based on the quantized and/or compressed right singular matrices in the full bandwidth; and performing segment-based interpolation on the quantized and/or compressed right singular matrices in the full bandwidth based on the first segment number M, to obtain right singular matrices in the full bandwidth as a second copy; and the communicating with the station based on the at least one piece of segment information comprises: sending a transmit beamforming frame to the station, wherein the transmit beamforming frame is generated based on the first copy or the second copy.

12. The method according to claim 11, wherein the first frame further comprises a segmentation mode, and the segmentation mode indicates that the transmit beamforming frame uses the first copy or the second copy.

13. The method according to any one of claims 1 to 12, wherein the method further comprises:

receiving an association request from the station; and sending an association response to the station, wherein the association request comprises indication information indicating that the station has a capability of calculating a right singular matrix by segment, and/or the association response comprises indication information indicating that an access point has a capability of calculating a right singular matrix by segment.

14. A channel feedback method, wherein the method comprises:

receiving a first frame from an access point, wherein the first frame comprises at least one of the following segment information: a segmentation enabling indication and a first segment number M; and the first segment number M indicates that an equivalent frequency domain channel corresponds to M subband channels; and communicating with the station based on the at least one piece of segment information.

15. The method according to claim 14, wherein the first frame comprises a null data packet NDP frame, the NDP frame is used to request the station to perform channel estimation on an original frequency domain channel H, and the original frequency domain channel H corresponds to M subband channels; and
the method further comprises:

dividing, based on the at least one piece of segment information, a channel estimation value $\hat{H}$ obtained by performing channel estimation on the original frequency domain channel H into the M subband channels;
performing singular value decomposition on the channel estimation value $\hat{H}$ based on the NDP frame, to obtain a right singular matrix corresponding to each subband channel in the M subband channels; and
sending, to the access point, the right singular matrix corresponding to each subband channel in the M subband channels.

16. The method according to claim 14 or 15, wherein the method further comprises:
receiving a first extremely high throughput signal EHT-SIG frame from the access point, wherein the first EHT-SIG frame comprises at least one of the following information: a second segmentation enabling indication and a second segment number $M'$.

17. The method according to claim 14, wherein the first frame comprises a second extremely high throughput signal EHT-SIG frame.

18. The method according to claim 17, wherein the method further comprises:

determining a third segmentation enabling indication and a third segment number $M''$ based on a channel estimation value $\hat{H}$ obtained by performing channel estimation on an original frequency domain channel H;
performing singular value decomposition on the channel estimation value $\hat{H}$, to obtain a right singular matrix corresponding to each subband channel in the $M''$ subband channels;
sending, to the access point, the right singular matrix corresponding to each subband channel in the $M''$ subband channels; and
sending first information to the access point, wherein the first information comprises at least one of the following information: the third segmentation enabling indication and the third segment number $M''$.

19. The method according to any one of claims 14 to 18, wherein the communicating with the station based on the at least one piece of segment information comprises:
receiving a transmit beamforming frame from the access point.

20. The method according to claim 17, wherein the method further comprises:

determining a third segmentation enabling indication and a third segment number $M''$ based on a channel estimation value $\hat{H}$ obtained by performing channel estimation on an original frequency domain channel H;
performing singular value decomposition on the channel estimation value $\hat{H}$, to obtain a right singular matrix corresponding to each subband channel in the $M''$ subband channels;
sending, to the access point, quantized and/or compressed right singular matrices in a full bandwidth and the right singular matrix corresponding to each subband channel in the $M''$ subband channels; and
sending first information to the access point, wherein the first information comprises at least one of the following information: the third segmentation enabling indication and the third segment number $M''$; and
the communicating with the station based on the at least one piece of segment information comprises:
receiving a transmit beamforming frame from the access point, wherein the transmit beamforming frame is generated based on the first copy or the second copy.

21. The method according to any one of claims 14 to 20, wherein the method further comprises:

receiving an association request from the station; and
sending an association response to the station, wherein
the association request comprises indication information indicating that the station has a capability of calculating a right singular matrix by segment, and/or the association response comprises indication information indicating that the access point has a capability of calculating right singular matrix by segment.

22. A channel feedback apparatus, comprising a module configured to perform the method according to any one of claims 1 to 13.

23. A channel feedback apparatus, comprising a module configured to perform the method according to any one of claims 14 to 21.

24. A channel feedback system, comprising the channel feedback apparatus according to claim 22 and the channel feedback apparatus according to claim 23.

25. A channel feedback apparatus, comprising a processor and an interface circuit, wherein the interface circuit is configured to receive a signal from a channel feedback apparatus other than the channel feedback apparatus and transmit the signal to the processor, or send a signal from the processor to a channel feedback apparatus other than the channel feedback apparatus, and the processor is configured to implement the method according to any one of claims 1 to 13 through a logic circuit or executing code instructions.

26. A channel feedback apparatus, comprising a processor and an interface circuit, wherein the interface circuit is configured to receive a signal from a channel feedback apparatus other than the channel feedback apparatus and transmit the signal to the processor, or send a signal from the processor to a channel feedback apparatus other than the channel feedback apparatus, and the processor is configured to implement the method according to any one of claims 14 to 21 through a logic circuit or executing code instructions.

27. A computer-readable storage medium, wherein the storage medium stores a computer program or instructions, and when the computer program or instructions are executed by a communication apparatus, the method according to any one of claims 1 to 21 is implemented.

FIG. 1

FIG. 2

AP

STA

S301: Send an NDP frame

S302: Perform channel estimation based on training data in the NDP frame, to obtain an estimation value of a channel matrix

S303: Calculate right singular matrices in a full bandwidth based on the estimation value of the channel matrix and an extraction interval indicated by an NDPA frame

S304: Quantize and compress the extracted right singular matrices in the full bandwidth

S305: Feed back quantized and compressed right singular matrices

S306: Decompress the quantized and compressed right singular matrices

S307: Perform interpolation on decompressed right singular matrices based on the extraction interval, to obtain right singular matrices in a full bandwidth

S308: Perform beamforming on an original frequency domain channel based on the right singular matrices in the full bandwidth obtained through interpolation, to generate a TxBF frame

S309: TxBF frame

FIG. 3

Absolute values of Channel (H)

FIG. 4a

Absolute values of Channel (Heft)

FIG. 4b

EP 4 572 175 A1

Full bandwidth          Subband          Subcarrier

FIG. 5

AP

STA

S601: First frame (including at least one of
the following segment information: a first
segmentation enabling indication and a first
segment number)

S602: The AP communicates with the STA based
on the at least one piece of segment information

FIG. 6

| AP | | STA |
|---|---|---|

S701: NDP frame (including at least one of the following segment information: a first segmentation enabling indication and a first segment number)

S702: Perform channel estimation based on training data in the NDP frame, to obtain an estimation value of a channel matrix

S703: Divide, based on the at least one piece of segment information, a full-bandwidth frequency domain channel obtained through estimation into M subband channels

S704: Perform singular value decomposition on the channel estimation value based on the NDP frame, to obtain a right singular matrix corresponding to each subband channel in the M subband channels

S705: Quantize and/or compress the right singular matrix corresponding to each subband channel in the M subband channels

S706: Quantized and/or compressed right singular matrix corresponding to each subband channel in the M subband channels

S707: Decompress the quantized and/or compressed right singular matrix corresponding to each subband channel in the M subband channels

S708: Perform, based on the first segment number, segment-based interpolation on the right singular matrix corresponding to each subband channel in the M subband channels, to obtain right singular matrices in a full bandwidth

S709: Perform beamforming on an original frequency domain channel based on the right singular matrices in the full bandwidth obtained through segment-based interpolation, to generate a TxBF frame

S710: TxBF frame

FIG. 7

MAC header

| Frame control | Duration | RA | TA | Sounding dialog token | Station information 1 | ... | Station information n | FCS |
|---|---|---|---|---|---|---|---|---|

Octets: 2    2    6    6    1    4    4    4

FIG. 8a

| B0 | B10 | B11 | B19 | B20 | B21 | B24 | B25 | B26 | B27 | B28 | B29 | B31 |
|---|---|---|---|---|---|---|---|---|---|---|---|---|
| AID11 | | Partial bandwidth information | | Reserved | Nc index | | Feedback type and Ng | | Disambiguation | Codebook size | Reserved | |

Bits:      11      9      1      4      2      1      1      3

FIG. 8b

FIG. 9

```
┌─────┐                                    ┌─────┐
│ AP  │                                    │ STA │
└─────┘                                    └─────┘
   │   S1001: NDP frame (including at least one of    │
   │      the following segment information: a first  │
   │      segmentation enabling indication and a first│
   │              segment number)                     │
   │──────────────────────────────────────────────▶ │
   │                                                  │
   │        ┌─────────────────────────────────────┐  │
   │        │ S1002: Perform channel estimation    │  │
   │        │ based on training data in the NDP    │  │
   │        │ frame, to obtain an estimation value │  │
   │        │ of a channel matrix                  │  │
   │        └─────────────────────────────────────┘  │
   │                                                  │
   │        ┌─────────────────────────────────────┐  │
   │        │ S1003: Divide, based on the at least │  │
   │        │ one piece of segment information, a  │  │
   │        │ full-bandwidth frequency domain      │  │
   │        │ channel obtained through estimation  │  │
   │        │ into M subband channels              │  │
   │        └─────────────────────────────────────┘  │
   │                                                  │
   │        ┌─────────────────────────────────────┐  │
   │        │ S1004: Perform singular value        │  │
   │        │ decomposition on the channel         │  │
   │        │ estimation value based on the NDP    │  │
   │        │ frame, to obtain a right singular    │  │
   │        │ matrix corresponding to each subband │  │
   │        │ channel in the M subband channels    │  │
   │        └─────────────────────────────────────┘  │
   │                                                  │
   │        ┌─────────────────────────────────────┐  │
   │        │ S1005: Quantize and/or compress the  │  │
   │        │ right singular matrix corresponding  │  │
   │        │ to each subband channel in the M     │  │
   │        │ subband channels                     │  │
   │        └─────────────────────────────────────┘  │
   │   S1006: Feed back a quantized and/or            │
   │      compressed right singular matrix            │
   │      corresponding to each subband channel       │
   │      in the M subband channels                   │
   │ ◀──────────────────────────────────────────────│
   │                                                  │
┌──────────────────────────────────┐                 │
│ S1007: Decompress the quantized   │                 │
│ and/or compressed right singular  │                 │
│ matrix corresponding to each      │                 │
│ subband channel in the M subband  │                 │
│ channels                          │                 │
└──────────────────────────────────┘                 │
   │                                                  │
  TO                                                 TO
FIG. 10B                                           FIG. 10B
```

FIG. 10A

CONT.
FROM
FIG. 10A

CONT.
FROM
FIG. 10A

S1008: Perform, based on the first segment number, segment-based interpolation on the right singular matrix corresponding to each subband channel in the M subband channels, to obtain right singular matrices in a full bandwidth

S1009: Obtain, based on the right singular matrices in the full bandwidth obtained through segment-based interpolation, a second segmentation enabling indication and a second segment number

S1010: First EHT-SIG frame (including at least one of the following information: the second segmentation enabling indication and the second segment number)

S1011: Perform beamforming on an original frequency domain channel based on the right singular matrices in the full bandwidth obtained through segment-based interpolation, to generate a TxBF frame

S1012: TxBF frame

FIG. 10B

EP 4 572 175 A1

| Non-EHT portion | EHT portion |
| pre-EHT modulated fields | EHT modulated fields |

| L-STF | L-LTF | L-SIG | RL-SIG | U-SIG | EHT-SIG | EHT-STF | EHT-LTF |  | Data | PE |

EHT-LTF: EHT-LTF symbol | EHT-LTF symbol | ... | EHT-LTF symbol

Data: Data symbol | ... | Data symbol

$N_{EHT-SIG}$  $N_{EHT-LTF}$  $N_{SYM}$

$t = 0$  $t_{L-LTF}$  $t_{L-SIG}$  $t_{RL-SIG}$  $t_{U-SIG}$  $t_{EHT-SIG}$  $t_{EHT-STF}$  $t_{EHT-LTF}$  $t_{EHT-Data}$  $t_{EHT-PE}$

FIG. 11a

| B13 | Beamforming | 1 | If a transposed matrix is applied to an EHT model field, set B13 to 1. Otherwise, set B13 to 0. |
|-----|-------------|---|----------------------------------------------------------------------------------------------|

FIG. 11b

```
        ┌──────┐                                    ┌──────┐
        │  AP  │                                    │ STA  │
        └──────┘                                    └──────┘
            │          S1201: NDP frame                │
            │─────────────────────────────────────────▶│
            │                                          │
```

S1202: Perform channel estimation based on training data in the NDP frame, to obtain an estimation value of a channel matrix

S1203: Calculate, based on the estimation value of the channel matrix and an extraction interval indicated by an NDPA frame, right singular matrices corresponding to required subcarriers

S1204: Quantize and/or compress the extracted right singular matrices

S1205: Feed back quantized and/or compressed right singular matrices

S1206: Decompress the quantized and/or compressed right singular matrices

S1207: Perform interpolation on decompressed right singular matrices based on the extraction interval, to obtain right singular matrices in a full bandwidth

S1208: Determine, based on the right singular matrices in the full bandwidth obtained through interpolation, a first segmentation enabling indication and a first segment number

TO
FIG. 12B

TO
FIG. 12B

FIG. 12A

CONT.
FROM
FIG. 12A

CONT.
FROM
FIG. 12A

S1209: Obtain, based on the first segmentation enabling indication and the first segment number, a right singular matrix corresponding to each subband channel in M subband channels

S1210: Perform, based on the first segment number, segment-based interpolation on the right singular matrix corresponding to each subband channel in the M subband channels, to obtain the right singular matrices in the full bandwidth

S1211: Second EHT-SIG frame (including at least one of the following information: the first segmentation enabling indication and the first segment number)

S1212: Perform beamforming on an original frequency domain channel based on the right singular matrices in the full bandwidth obtained through segment-based interpolation, to generate a TxBF frame

S1213: TxBF frame

FIG. 12B

| AP | | STA |
|---|---|---|

S1301: NDP frame

S1302: Perform channel estimation based on training data in the NDP frame, to obtain an estimation value of a channel matrix

S1303: Determine a third segmentation enabling indication and a third segment number based on the channel estimation value obtained by performing channel estimation on an original frequency domain channel

S1304: Perform singular value decomposition on the channel estimation value to obtain a right singular matrix corresponding to each subband channel in $M''$ subband channels

S1305: Quantize and/or compress the right singular matrix corresponding to each subband channel in the $M''$ subband channels

S1306: Quantized and/or compressed right singular matrix corresponding to each subband channel in the $M''$ subband channels

S1307: First information (including at least one of the following information: the third segmentation enabling indication and the third segment number)

S1308: Decompress the quantized and/or compressed right singular matrix corresponding to each subband channel in the $M''$ subband channels

TO
FIG. 13B

TO
FIG. 13B

FIG. 13A

CONT.
FROM
FIG. 13A

CONT.
FROM
FIG. 13A

S1309: Perform, based on the first information, segment-based interpolation on the right singular matrix corresponding to each subband channel in the M" subband channels, to obtain right singular matrices in a full bandwidth

S1310: Determine a first segmentation enabling indication and a first segment number based on the right singular matrices in the full bandwidth obtained through segment-based interpolation

S1311: Second EHT-SIG frame (including at least one of the following information: the first segmentation enabling indication and the first segment number)

S1312: Perform beamforming on the original frequency domain channel based on the right singular matrices in the full bandwidth obtained through segment-based interpolation, to generate a TxBF frame

S1313: TxBF frame

FIG. 13B

AP

STA

S1401: NDP frame

S1402: Perform channel estimation based on training data in the NDP frame, to obtain an estimation value of a channel matrix

S1403a: Determine a third segmentation enabling indication and a third segment number based on the channel estimation value obtained by performing channel estimation on an original frequency domain channel

S1403b: Calculate right singular matrices in a full bandwidth based on the estimation value of the channel matrix and an extraction interval indicated by an NDPA frame

S1404a: Perform singular value decomposition on the channel estimation value to obtain a right singular matrix corresponding to each subband channel in M'' subband channels

S1405: Quantize and/or compress the right singular matrices in the full bandwidth and the right singular matrix corresponding to each subband channel in the M'' subband channels

S1406: Quantized and/or compressed right singular matrices in the full bandwidth and quantized and/or compressed right singular matrix corresponding to each subband channel in the M'' subband channels

TO
FIG. 14B

TO
FIG. 14B

FIG. 14A

CONT.
FROM
FIG. 14A

CONT.
FROM
FIG. 14A

S1407a: First information (including at least one of the following information: the third segmentation enabling indication and the third segment number)

S1408: Separately decompress the quantized and/or compressed right singular matrices in the full bandwidth and the quantized and/or compressed right singular matrix corresponding to each subband channel in the M" subband channels

S1409a: Perform, based on the first information, segment-based interpolation on the right singular matrix corresponding to each subband channel in the M" subband channels, to obtain right singular matrices in the full bandwidth as a first copy

S1409b: Perform interpolation on decompressed right singular matrices based on the extraction interval, to obtain right singular matrices in the full bandwidth

S1410b: Determine, based on the right singular matrices in the full bandwidth obtained through interpolation, a first segmentation enabling indication and a first segment number

S1411b: Obtain, based on the first segmentation enabling indication and the first segment number M, a right singular matrix corresponding to each subband channel in M subband channels

S1412b: Perform, based on the first segment number M, segment-based interpolation on the right singular matrix corresponding to each subband channel in the M subband channels, to obtain right singular matrices in the full bandwidth as a second copy

TO
FIG. 14C

TO
FIG. 14C

FIG. 14B

CONT.
FROM
FIG. 14B

CONT.
FROM
FIG. 14B

S1413: Second EHT-SIG frame (including at least
one of the following information: a segmentation
mode, the first segmentation enabling indication,
and the first segment number)

S1414: Perform beamforming on the original
frequency domain channel based on the first copy or
the second copy, to generate a TxBF frame

S1415: TxBF frame

FIG. 14C

```
  ┌─────┐                              ┌─────┐
  │ AP  │                              │ STA │
  └─────┘                              └─────┘
     │        S1501: NDP frame            │
     │──────────────────────────────────▶│
     │                                    │
     │        ┌───────────────────────────────────────┐
     │        │ S1502: Perform channel estimation based on │
     │        │ training data in the NDP frame, to obtain an │
     │        │ estimation value of a channel matrix      │
     │        └───────────────────────────────────────┘
     │                                    │
     │        ┌───────────────────────────────────────┐
     │        │ S1503: Determine a third segmentation      │
     │        │ enabling indication and a third segment    │
     │        │ number based on the channel estimation value │
     │        │ obtained by performing channel estimation on │
     │        │ an original frequency domain channel       │
     │        └───────────────────────────────────────┘
     │                                    │
     │        ┌───────────────────────────────────────┐
     │        │ S1504: Perform singular value decomposition │
     │        │ on the channel estimation value to obtain a │
     │        │ right singular matrix corresponding to each │
     │        │ subband channel in M" subband channels     │
     │        └───────────────────────────────────────┘
     │                                    │
     │        ┌───────────────────────────────────────┐
     │        │ S1505: Quantize and/or compress the right  │
     │        │ singular matrix corresponding to each subband │
     │        │ channel in the M" subband channels        │
     │        └───────────────────────────────────────┘
     │                                    │
     │  S1506: Quantized and/or compressed │
     │  right singular matrix corresponding to │
     │  each subband channel in the M" subband │
     │           channels                  │
     │◀───────────────────────────────────│
     │                                    │
     │  S1507: First information (including at │
     │  least one of the following information: │
     │    the third segmentation enabling  │
     │  indication and the third segment number) │
     │◀───────────────────────────────────│
     ╲╱                                   ╲╱
     TO                                   TO
  FIG. 15B                             FIG. 15B
```

FIG. 15A

CONT.
FROM
FIG. 15A

CONT.
FROM
FIG. 15A

S1508: Decompress the quantized and/or compressed right singular matrix corresponding to each subband channel in the M" subband channels

S1509: Perform, based on the first information, segment-based interpolation on the right singular matrix corresponding to each subband channel in the M" subband channels, to obtain right singular matrices in a full bandwidth

S1510: Perform beamforming on the original frequency domain channel based on the right singular matrices in the full bandwidth obtained through segment-based interpolation, to generate a TxBF frame

S1511: TxBF frame

FIG. 15B

```
      AP                                                    STA
 ┌──────────┐                                          ┌──────────┐
 │    AP    │                                          │   STA    │
 └──────────┘   S1601: Send an NDP frame               └──────────┘
      │ ──────────────────────────────────────────────────▶ │
      │                                                      │
      │              ┌─────────────────────────────────────┐│
      │              │ S1602: Perform channel estimation    ││
      │              │ based on training data in the NDP     ││
      │              │ frame, to obtain an estimation value  ││
      │              │ of a channel matrix                   ││
      │              └─────────────────────────────────────┘│
      │              ┌─────────────────────────────────────┐│
      │              │ S1603: Determine, based on the       ││
      │              │ channel estimation value, a          ││
      │              │ segmentation enabling indication, a  ││
      │              │ segment number M, and a right        ││
      │              │ singular matrix corresponding to     ││
      │              │ each subband channel in M subband    ││
      │              │ channels                              ││
      │              └─────────────────────────────────────┘│
      │              ┌─────────────────────────────────────┐│
      │              │ S1604: Quantize and/or compress      ││
      │              │ right singular matrices in a full    ││
      │              │ bandwidth, where the right singular  ││
      │              │ matrices in the full bandwidth are   ││
      │              │ obtained based on the right singular ││
      │              │ matrices corresponding to the M      ││
      │              │ subband channels, and a right        ││
      │              │ singular matrix at each subcarrier   ││
      │              │ in the M subband channels is         ││
      │              │ obtained by replicating the right    ││
      │              │ singular matrix corresponding to     ││
      │              │ each subband channel in the M        ││
      │              │ subband channels                      ││
      │              └─────────────────────────────────────┘│
      │  S1605: Feed back quantized and/or                   │
      │  compressed right singular matrices in the           │
      │  full bandwidth                                      │
      │ ◀──────────────────────────────────────────────────  │
 ┌──────────────────────────────────────────┐                │
 │ S1606: Decompress the quantized and/or     │               │
 │ compressed right singular matrices in the  │               │
 │ full bandwidth                             │               │
 └──────────────────────────────────────────┘                │
 ┌──────────────────────────────────────────┐                │
 │ S1607: Perform, based on an extraction     │               │
 │ interval, interpolation on decompressed    │               │
 │ right singular matrices, to obtain right   │               │
 │ singular matrices in the full bandwidth    │               │
 └──────────────────────────────────────────┘                │
 ┌──────────────────────────────────────────┐                │
 │ S1608: Perform beamforming on an original  │               │
 │ frequency domain channel based on the right│               │
 │ singular matrices obtained through         │               │
 │ interpolation in the full bandwidth, to    │               │
 │ generate a TxBF frame                      │               │
 └──────────────────────────────────────────┘                │
      │              S1609: TxBF frame                        │
      │ ──────────────────────────────────────────────────▶ │
      │                                                      │
```

FIG. 16

1700

Information feedback
apparatus

Processing unit — 171

Transceiver unit — 172

FIG. 17

1800

Channel feedback apparatus

Transceiver/
Communication
interface — 183

Processor/
Processing circuit — 182

— 184

Memory/Storage
medium — 181

FIG. 18

## INTERNATIONAL SEARCH REPORT

| International application No. |
|---|
| **PCT/CN2023/125893** |

| A. | CLASSIFICATION OF SUBJECT MATTER |
|---|---|

H04B 7/06(2006.01)i

According to International Patent Classification (IPC) or to both national classification and IPC

| B. | FIELDS SEARCHED |
|---|---|

Minimum documentation searched (classification system followed by classification symbols)

IPC: H04B

Documentation searched other than minimum documentation to the extent that such documents are included in the fields searched

Electronic data base consulted during the international search (name of data base and, where practicable, search terms used)

CNABS; CNTXT; VEN; EPTXT; USTXT; WOTXT; CNKI: 信道, 反馈, 矩阵, 指示, 分段, 子载波, 分组, 波束赋形, 波束成型, channel, report, feedback, indicate, group, segment, section, matrix, beamforming, subcarrier

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 115913301 A (HUAWEI TECHNOLOGIES CO., LTD.) 04 April 2023 (2023-04-04) description, paragraphs [0006]-[0061] | 1-3, 5, 7, 10, 13-15, 17, 19, 21-27 |
| X | CN 106302271 A (ZTE CORP.) 04 January 2017 (2017-01-04) description, paragraphs [0007]-[0045] and [0157]-[0166] | 1-3, 5, 7, 10, 13-15, 17, 19, 21-27 |
| A | CN 102870342 A (LG ELECTRONICS INC.) 09 January 2013 (2013-01-09) entire document | 1-27 |
| A | CN 104184562 A (ZTE WAVETONE SCIENCE AND TECHNOLOGY LTD.) 03 December 2014 (2014-12-03) entire document | 1-27 |
| A | CN 114630357 A (HUAWEI TECHNOLOGIES CO., LTD.) 14 June 2022 (2022-06-14) entire document | 1-27 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **24 November 2023** | **05 December 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2023/125893** |

| Patent document cited in search report | | | Publication date (day/month/year) | Patent family member(s) | Publication date (day/month/year) |
| --- | --- | --- | --- | --- | --- |
| CN | 115913301 | A | 04 April 2023 | None | |
| CN | 106302271 | A | 04 January 2017 | None | |
| CN | 102870342 | A | 09 January 2013 | None | |
| CN | 104184562 | A | 03 December 2014 | None | |
| CN | 114630357 | A | 14 June 2022 | None | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211340800